(19) Europäisches Patentamt
European Patent Office
Office européen des brevets

(11) EP 2 896 671 B1

(12) **EUROPEAN PATENT SPECIFICATION**

(45) Date of publication and mention of the grant of the patent:
**18.08.2021 Bulletin 2021/33**

(21) Application number: **13837639.7**

(22) Date of filing: **11.09.2013**

(51) Int Cl.:
***C09K 3/00*** *(2006.01)* ***B32B 27/00*** *(2006.01)*

(86) International application number:
**PCT/JP2013/074532**

(87) International publication number:
**WO 2014/042188 (20.03.2014 Gazette 2014/12)**

(54) **ANTISTATIC RELEASE AGENT AND ANTISTATIC RELEASE FILM**

ANTISTATISCHES TRENNMITTEL UND ANTISTATISCHE TRENNFOLIE

AGENT ET FILM ANTI-ADHÉSIFS ANTISTATIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2012 JP 2012201799**

(43) Date of publication of application:
**22.07.2015 Bulletin 2015/30**

(73) Proprietors:
- **Shin-Etsu Polymer Co., Ltd.**
  **Chiyoda-ku**
  **Tokyo 101-0041 (JP)**
- **Shin-Etsu Chemical Co., Ltd.**
  **Tokyo 100-0004 (JP)**

(72) Inventors:
- **KANTO Kohei**
  **Saitama-shi**
  **Saitama 331-0811 (JP)**
- **MATSUBAYASHI Sou**
  **Saitama-shi**
  **Saitama 331-0811 (JP)**
- **YOSHIDA Kazuyoshi**
  **Saitama-shi**
  **Saitama 331-0811 (JP)**
- **NAKAJIMA Tsutomu**
  **Annaka-shi**
  **Gunma 379-0224 (JP)**
- **IRIFUNE Shinji**
  **Annaka-shi**
  **Gunma 379-0224 (JP)**

(74) Representative: **TBK**
**Bavariaring 4-6**
**80336 München (DE)**

(56) References cited:
**EP-A1- 1 792 948**
**EP-A1- 2 253 466**
**EP-A1- 2 894 207**
**WO-A1-2008/114916**
**WO-A1-2012/043091**
**JP-A- H01 215 857**
**JP-A- 2001 123 130**
**JP-A- 2002 241 613**
**JP-A- 2003 055 552**
**JP-A- 2003 251 756**
**JP-A- 2009 214 359**
**JP-A- 2010 168 425**
**JP-A- 2010 180 347**
**JP-A- 2012 071 433**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 896 671 B1

## Description

[TECHNICAL FIELD]

The present invention relates to an antistatic release agent and antistatic release film having antistatic properties.

Priority is claimed on Japanese Patent Application No. 2012-201799, filed on September 13, 2012, the content of which is incorporated herein by reference.

[BACKGROUND ART]

A release film in which a silicone-based release agent is coated onto the surface of a plastic film is widely used.

As a silicone release agent, in terms of reducing the used amount of solvent, an emulsion type silicone has been used.

However, there is a problem in that the water-based emulsion type silicone has low adhesion property (anchorage property) relative to a plastic film.

To solve the problem, an organopolysiloxane having an alkenyl group at the terminal of molecule thereof is used as a release agent (see Patent Document 1), and a release agent in which emulsion of non-silicone type polymer is blended (see Patent Document 2) have been proposed.

However, even in the case of these release agents, adhesion property relative to a plastic film is insufficient.

However, a plastic film is easily charged, and tends to be more easily charged when the plastic film is coated with a silicone-based release agent. Consequently, there has been a need to impart antistatic properties to these release film.

Although ionic conductive compounds such as surfactants have been widely used in the past as antistatic agents, since the conductivity of ionic conductive compounds is dependent on humidity, the antistatic properties thereof are unstable. Therefore, it is known to use π-conjugated electrically conductive polymers, in which electrical conductivity is not dependent on humidity, as antistatic agents for imparting antistatic properties to release film (see Patent Document 3).

The π-conjugated electrically conductive polymers are not soluble and meltable, and applying and extrusion coating cannot be employed. Therefore, in general, a polyanion is used as both a dopant and a surfactant to form water dispersion (see Patent Document 4).

However, the water dispersion tends to exhibit low adhesion property to a plastic film.

Furthermore, when silicone-based release agent is added to the water dispersion containing a complex of a π-conjugated electrically conductive polymer and a polyanion, and mixed to prepare a release agent, and then a release layer is formed from the release agent, it is difficult to obtain both release property and antistatic property.

In particular, in recent years, with respect to the release film used in optical components or electronic and electrical components, the release film is required to have easy releasing property capable of peeling the film with weak peel strength. However, it is difficult to make a release film having easy releasing property while ensuring the antistatic property.

[PRIOR ART DOCUMENTS]

[PATENT DOCUMENTS]

[Patent Document 1] Japanese Unexamined Patent Application, First Publication No. Hei6-57144
[Patent Document 2] Japanese Unexamined Patent Application, First Publication No. Hei11-222557
[Patent Document 3] Japanese Unexamined Patent Application, First Publication No. 2002-241613
[Patent Document 4] Japanese Patent Publication No. 2636968

[DISCLOSURE OF THE INVENTION]

[PROBLEMS TO BE SOLVED BY THE INVENTION]

An object of the present invention is to provide an antistatic release agent capable of forming an antistatic release layer having superior adhesion properties and antistatic properties to a plastic film and having easy releasing property, and to provide an antistatic release film.

[Means for Solving the Problems]

The present invention has the modes indicated below.

[1] An antistatic release agent containing: a silicone emulsion which contains components (A) to (E) shown below; and a conductive complex of a $\pi$-conjugated electrically conductive polymer and a polyanion, wherein the amount of the conductive complex relative to 100 parts by mass of the total amount of the components (A) to (E) is 0.5 to 100 parts by mass, the amount of the component (A) relative to 100 parts by mass of the total amount of the components (A) to (D) is 10 to 40 parts by mass, the amount of the component (B) relative to 100 parts by mass of the total amount of the components (A) to (D) is 20 to 70 parts by mass, the amount of the component (C) relative to 100 parts by mass of the total amount of the components (A) to (D) is 1 to 10 parts by mass, the amount of the component (D) relative to 100 parts by mass of the total amount of the components (A) to (D) is 5 to 30 parts by mass, provided that, the amount of the component (D) relative to the total amount of components (C) and (D) is 50 to 90% by mass, and the amount of the component (E) is an amount such that the molar ratio of the total amount of SiH group within organohydrogenpolysiloxane V relative to the total amount of alkenyl group in the components (A) to (D), represented by (amount of SiH group) / (amount of alkenyl group) is 1.0 to 3.0:

Component (A): organopolysiloxane I which has viscosity of 5 to 100 mPa·s at 25°C and which is represented by average compositional formula (1) shown below;

[Chemical Formula 1]

Average compositional formula (1)

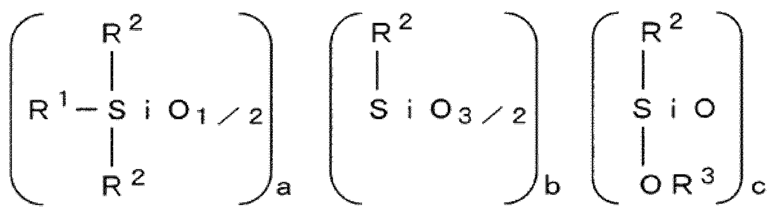

wherein, $R^1$ represents an alkenyl group having 2 to 8 carbon atoms; $R^2$ represents a monovalent hydrocarbon group having 1 to 10 carbon atoms with or without a substituent or an alkenyl group having 2 to 8 carbon atoms, each $R^2$ may be the same or different; $R^3$ represents a hydrogen atom, a monovalent hydrocarbon group having 1 to 10 carbon atoms with or without a substituent; a and b each represents a positive integer; c represents an integer of 0 to 10, provided that, a, b and c each fulfills $(b+c)/a = 0.6$ to 1.5, and $0 \leq c/(b+c) \leq 0.05$:

Component (B): organopolysiloxane II which has viscosity of 30 to 10,000 mPa·s at 25°C and which is represented by the average compositional formula (2) shown below;

[Chemical Formula 2]

Average compositional formula (2)

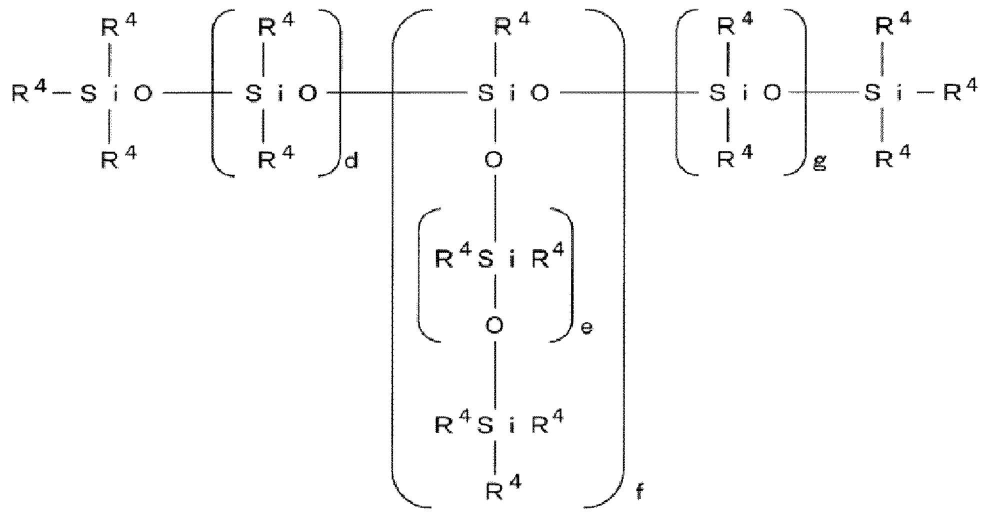

wherein, $R^4$ represents a monovalent hydrocarbon group having 1 to 10 with or without a substituent or an alkenyl group having 2 to 8 carbon atoms, each $R^4$ may be the same or different, provided that, at least two of $R^4$ represents alkenyl groups; d, g and e each represents an integer of 0 or more; f represents an integer of 0 to 10, provided that f is within the range of $0 \leq f \leq 10$; and each of d, e, f and g is an integer such that the viscosity of organopolysiloxane II is adjusted to a concentration within the range of 30 to 10,000 mPa·s at 25°C:
Component (C): organopolysiloxane III which has viscosity of 30% by mass toluene-diluted solution of 1,000 to 50,000 mPa·s at 25°C, and has an alkenyl group and has an alkenyl value of 0.01 mol/100g or more:
Component (D): organopolysiloxane IV which has viscosity of 30% by mass toluene-diluted solution of 1,000 to 50,000 mPa·s at 25°C, and has an alkenyl group and has an alkenyl value of 0.0002 mol/100g or more and less than 0.01 mol/100g, wherein the amount of aryl group relative to the total organic groups is 0.5 to 10 mol%:
Component (E): organohydrogenpolysiloxane V which is represented by average compositional formula (3) shown below, and has three hydrogen atoms bonded directly to silicon atoms in one molecule, and has viscosity of 5 to 2,000 mPa·s at 25°C;

Average compositional formula (3) $R^5_hH_iSiO_{(4-h-i)/2}$

wherein, $R^5$ represents a monovalent hydrocarbon group having 1 to 10 carbon atoms with or without a substituent, and does not contain an aliphatic unsaturated bond; and h and i each represents an integer and fulfills $h+i \leq 3$.
[2] The antistatic release agent according to [1], further containing a conductive improver.
[3] The antistatic release agent according to [1] or [2], further containing a surfactant, a platinum group metal-based catalyst and water, wherein the amount of the surfactant relative to 100 parts by mass of the total amount of the components (A) to (E) is 0.1 to 20 parts by mass, and the amount of water relative to 100 parts by mass of the total amount of the components (A) to (E) is 50 to 100,000.
[4] An antistatic release film containing: a plastic film, a release agent layer formed on at least one surface of the plastic film, wherein the release agent layer is formed from the release agent according to any one of [1] to [3].

[Effects of the Invention]

The antistatic release agent of the first aspect of the present invention can form an antistatic release layer having superior adhesion property and antistatic property relative to a plastic film and having easy releasing property.
The antistatic release film and of the second aspect of the present invention has superior adhesion property and antistatic property relative to a plastic film and has an antistatic release layer having easy releasing property.

[BEST MODE FOR CARRYING OUT THE INVENTION]

<Antistatic release agent>

(Silicone emulsion)

The silicone emulsion is an emulsion containing the following components (A) to (E).

[Component (A): organopolysiloxane I]

The organopolysiloxane I as a component (A) is an organopolysiloxane represented by average compositional formula (1) shown below.
In the average compositional formula (1), each unit in parentheses is bonded in a random manner.
In the present specification, with respect to the average compositional formulae (1) and (2), the "average compositional formula" shows the molar ratio or the mole number of the siloxane unit constituting the organopolysiloxane, and indicates that the organopolysiloxane is a random copolymer.
In the average compositional formula (3), when the total number of silicon atoms containing the organopolysiloxane is regarded as 1, the average compositional formula represents the ratio of the number of hydrogen atom, and oxygen atom and substituent $R^5$ bonded to silicon atoms.
$R^1$ in the average compositional formula (1) is an alkenyl group having 2 to 8, and more preferably an alkenyl group having 2 to 6.
Specific examples for $R^1$ include a vinyl group, an allyl group, a butenyl group, a pentenyl group, a hexenyl group and the like, and in terms of industrial perspective, a vinyl group is preferred.
$R^2$ represents an alkenyl group of 2 to 8 carbon atoms or a monovalent hydrocarbon group having 1 to 10 carbon atoms with or without a substituent.
As a monovalent hydrocarbon group having 1 to 10 carbon atoms without a substituent, an alkyl group (a methyl group, an ethyl group, a propyl group, a butyl group and the like), a cycloalkyl group (a cyclohexyl group and the like), and an aryl group (a phenyl group, a tolyl group and the like) can be mentioned.
Among these, a methyl group is preferred.
As a monovalent hydrocarbon group having 1 to 10 carbon atoms with a substituent, a group in which part or all hydrogen atoms of the hydrocarbon group has been substituted with a hydroxyl group, a cyano group, a halogen group or the like.
For example, a hydroxypropyl group, a cyanoethyl group, a 1-chloropropyl group, a 3,3,3-trifluoropropyl and the like can be mentioned.
As the alkenyl group having 2 to 8 carbon atoms, an alkenyl group having 2 to 6 carbon atoms is preferred.
Specific examples of the alkenyl group include a vinyl group, an allyl group, a butenyl group, a pentenyl group, a hexenyl group and the like, and in terms of industrial perspective, a vinyl group is preferred.
Each $R^2$ may be the same or different.
$R^3$ is selected from a hydrogen atom or a monovalent hydrocarbon group having 1 to 10 carbon atoms with or without a substituent.
Examples of the monovalent hydrocarbon group having 1 to 10 carbon atoms with or without a substituent are the same as those described for $R^2$.
The organopolysiloxane I may contain at least one, or two or more units selected from a monofunctional siloxane unit, a difunctional siloxane unit and a tetrafunctional siloxane unit, which does not have an alkenyl group, within the range not to impair the effect of the present invention.
In the average compositional formula (1), a and b each represents a positive integer, and fulfills $0<a\leq50$, b fulfills $0<b\leq50$, and c represents an integer of 0 to 10, provided that $(b+c)/a = 0.6$ to 1.5, and preferably $(b+c)/a = 0.8$ to 1.3. b and c also fulfill $c/(b+c) = 0$ to 0.05, and preferably $c/(b+c) = 0$ to 0.03.
When $(b+c)/a$ is less than the lower limit, adhesion properties to a plastic film is deteriorated. When $(b+c)/a$ is greater than the upper limit, it becomes difficult to synthesize the organopolysiloxane I.
When $c/(b+c)$ is greater than the upper limit, the number of alkoxy group and hydroxyl group is too large, the curability of the antistatic release agent is deteriorated and hence, formation of the release layer becomes difficult.
It is preferable that the organopolysiloxane I as a component (A) is a random copolymer containing structural units (a1) to (a3) shown below.

[Chemical Formula 3]

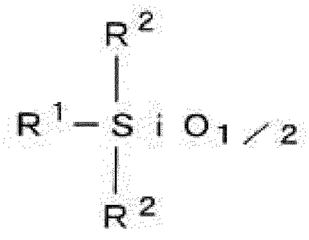
(a1)

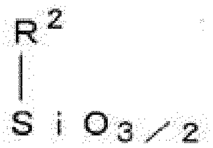
(a2)

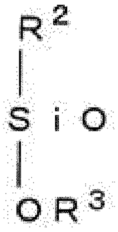
(a3)

In the formulae, [(amount of the structural unit (a2)) + (amount of the structural unit (a3))] / (amount of the structural unit (a1)) = 0.6 to 1.5 and 0≤(amount of the structural unit (a3)) / [(amount of the structural unit (a2)) + (amount of the structural unit (a3))] ≤0.05. When the value of [(amount of the structural unit (a2)) + (amount of the structural unit (a3))] / (amount of the structural unit (a1)) is smaller than the lower limit, adhesion property to a plastic film is deteriorated. When the value is larger than the upper limit, it becomes difficult to synthesize organopolysiloxane I. When the value of (amount of the structural unit (a3)) / [(amount of the structural unit (a2)) / (amount of the structural unit (a3))] is greater than the upper limit, the number of alkoxy group and hydroxyl group is too large, the curability of the antistatic release agent is deteriorated and hence, formation of the release agent becomes difficult. The amount of the structural units (a1) to (a3) can be determined based on 29SiNMR. The amount of each of structural units is mole number of the structural unit constituting one molecule of an organopolysiloxane.

The viscosity of organopolysiloxane I at 25°C is 5 to 100 mPa·s, and more preferably 10 to 80 mPa·s. When the viscosity of the component (A) is less than the lower limit, storage stability of the antistatic release agent is deteriorated. When the viscosity of the component (A) is greater than the upper limit, it becomes difficult to synthesize the organopolysiloxane I.

In the present specification, the term "viscosity" may be measured using BM type rotary viscometer. It should be noted that the viscosity is determined at 25°C, unless otherwise specified. That is, even though the viscosity is out of the range described in the present specification, when the viscosity is corrected to be the viscosity at 25°C and the corrected viscosity is within the range recited in the present specification, the organopolysiloxane falls under the definition of the present invention.

The alkenyl value of organopolysiloxane I is preferably 0.45 to 0.75 mol/100g, and more preferably 0.50 to 0.65 mol/100g.

The amount of the component (A) relative to 100 parts by mass of the total amount of the component (A), component (B), component (C) and component (D) is 1 to 40 parts by mass, and more preferably 10 to 30 parts by mass.

The amount of the component (A) relative to the total amount of the component (A), component (B), component (C) and component (D) is 1 to 40% by mass, and more preferably 10 to 30% by mass.

When the amount of the component (A) is at least as large as the lower limit, the release agent layer can obtain easy releasing property. When the amount of the component (A) is no less than the upper limit, adhesion properties to a plastic film can be improved.

As the component (A), one type may be used, or two or more types may be used in combination.

[Component (B): organopolysiloxane II]

The organopolysiloxane II as the component (B) is an organopolysiloxane represented by the average compositional formula (2). The organopolysiloxane II is a component that contributes to peel strength significantly. The peel strength of the release agent layer formed from the antistatic release agent is varied based on the structure or substituent of the organopolysiloxane II.

$R^4$ in the average compositional formula (2) is a monovalent hydrocarbon group with or without a substituent or an alkenyl group having 2 to 8 carbon atoms. As an alkenyl group having 2 to 8 carbon atoms, an alkenyl group having 2 to 6 carbon atom is preferable. Each $R^4$ may be the same or different, and at least two of $R^4$ are alkenyl groups. The monovalent hydrocarbon group with or without a substituent and an alkenyl group having 2 to 8 carbon atoms are the same as those exemplified for $R^2$.

Each of d, g and e in the average compositional formula (2) is an integer of 0 or more, f is an integer of 0 to 10, provided that, f is within the range of 0≤f≤10. When f is greater than the upper limit, organopolysiloxane sometimes

becomes gel state during synthesis, and as a result, organopolysiloxane may not be obtained. Each of d, e, f and g is a integer such that the viscosity of organopolysiloxane II at 25°C becomes within the range of 30 to 10,000 mPa·s.

The organopolysiloxane II is not necessarily a single composition. When the average compositional formula is fulfilled, a mixture containing several types of organopolysiloxanes having a different composition can be used.

The viscosity of organopolysiloxane II at 25°C is 30 to 10,000 mPa·s, preferably 60 to 5,000 mPa·s, and more preferably 100 to 3,000 mPa·s. When the viscosity of the component (B) is less than the lower limit, storage stability of the antistatic release agent is deteriorated. When the viscosity of the component (B) is greater than the upper limit, formation of release agent layer using antistatic release agent becomes difficult.

The alkenyl value of organopolysiloxane II is preferably 0.003 to 0.1 mol/100g, more preferably 0.005 to 0.08 mol/100g, and still more preferably 0.007 to 0.05 mol/100g.

The amount of the component (B) relative to 100 parts by mass of total amount of the component (A), component (B), component (C) and component (D) is 20 to 70 parts by mass, and preferably 40 to 60 parts by mass. The amount of the component (B) relative to the total amount of the component (A), component (B), component (C) and component (D) is 20 to 70% by mass, and preferably 40 to 60% by mass. When the amount of the component (B) is at least as large as the lower limit, the release layer has easy releasing property. When the amount of the component (B) is not more than the upper limit, adhesion properties to a plastic film can be improved.

As the component (B), one type may be used, or two or more types may be used in combination.

[Component (C): organopolysiloxane III]

The organopolysiloxane III as a component (C) is an organopolysiloxane having an alkenyl group. As an alkenyl group, an alkenyl group having 8 or less carbon atoms is preferable, and an alkenyl group having 2 to 6 carbon atoms is more preferable. Specific examples of alkenyl groups include a vinyl group, an allyl group, a butenyl group, a pentenyl group, a hexenyl group and the like, and in terms of industrial perspective, a vinyl group is preferred.

The alkenyl value of organopolysiloxane III is 0.01 mol/100g or more, 0.15 mol/100g or less is preferable, and 0.02 to 0.10 mol/100g is more preferable. When the alkenyl value of the organopolysiloxane III is less than the lower limit, adhesion properties to a plastic film is deteriorated. In the present invention, the term "alkenyl value" refers to the mole number of alkenyl group contained in 100 g of an organopolysiloxane. When the alkenyl group is a vinyl group, the alkenyl value is sometimes referred to as "vinyl value".

The molecular structure of the organopolysiloxane III is not particularly limited, and a chain-like molecular structure is preferable.

The term "chain-like" molecular structure means a linear structure. It is preferable that the organopolysiloxane does not have an aryl group.

The monovalent group other than the alkenyl group, bonded directly to a silicon atom in organopolysiloxane III is not particularly limited, and for example, a monovalent hydrocarbon group having 1 to 10 carbon atoms with or without a substituent can be mentioned. Examples of the monovalent hydrocarbon group having 1 to 10 carbon atoms with or without a substituent are the same as those exemplified above for $R^2$.

The number average molecular weight of the organopolysiloxane III is preferably 100,000 to 900,000, and more preferably 100,000 to 500,000.

The viscosity of 30% by mass toluene-diluted solution of the organopolysiloxane III at 25°C is within the range from 1,000 to 50,000 mPa·s, and the range from 1,500 to 20,000 mPa·s is preferable.

When the viscosity of toluene-diluted solution of the organopolysiloxane III is less than the lower limit, adhesion properties to a plastic film is deteriorated. When the viscosity of toluene-diluted solution of the organopolysiloxane III is greater than the upper limit, stability of silicone emulsion is deteriorated. Here, the expression "viscosity of toluene-diluted solution" means the viscosity of the toluene-diluted solution of organopolysiloxane at 25°C, and the solution is obtainable by diluting organopolysiloxane with toluene so as to be 30% by mass.

The amount of the component (C) relative to 100 parts by mass of total amount of the component (A), component (B), component (C) and component (D) is 1 to 10 parts by mass, and preferably 3 to 7 parts by mass. The amount of the component (C) relative to the total amount of the component (A), component (B), component (C) and component (D) is 1 to 10% by mass, and more preferable 3 to 7% by mass. When the amount of the component (C) is at least as large as the lower limit, the release layer has easy releasing property. When the amount of the component (C) is not more than the upper limit, adhesion properties to a plastic film can be improved.

As a component (C), one type of organopolysiloxane may be used, or two or more types of organopolysiloxanes may be used in combination.

[Component (D): organopolysiloxane IV]

The organopolysiloxane IV as a component (D) is an organopolysiloxane having an alkenyl group and an aryl

group. As an alkenyl group, an alkenyl group having 8 or less carbon atoms is preferable, and an alkenyl group having 2 to 6 carbon atoms is more preferable. Specific examples of alkenyl groups include a vinyl group, an allyl group, a butenyl group, a pentenyl group, a hexenyl group and the like, and in terms of industrial perspective, a vinyl group is preferred. As an aryl group, a phenyl group and a tolyl group can be mentioned, and in terms of industrial perspective, a phenyl group is preferred.

The alkenyl value of the organopolysiloxane IV is 0.0002 mol/100g or more, and less than 0.01 mol/100g, and 0.0015 to 0.005 mol/100g is preferable. When the alkenyl value of the organopolysiloxane IV is less than the lower limit, curability is deteriorated. When the alkenyl value of the organopolysiloxane IV is greater than the upper limit, adhesion properties to a plastic film is deteriorated.

The amount of aryl group within a organopolysiloxane relative to the total amount of organic groups within organopolysiloxane IV is 0.5 to 10 mol%, and 1.0 to 3.0 mol% is more preferable. When the amount of aryl group within an organopolysiloxane IV is less than the lower limit or greater than the upper limit, adhesion properties to a plastic film is deteriorated. In the present specification, the expression "amount of aryl group" means the percentage of mole number of aryl group relative to the mole number of the all organic groups bonded to silicon atoms in the organopolysiloxane. When the aryl group is a phenyl group, the amount of aryl group is sometimes referred to as "the amount of phenyl group". The term "all organic groups" refers to all organic group bonded to silicon atoms within the organopolysiloxane.

The molecular structure of the organopolysiloxane IV is not particularly limited, and a chain-like molecular structure is preferable.

The monovalent group other than the alkenyl group, bonded directly to a silicon atom within organopolysiloxane IV is not particularly limited, and for example, a monovalent hydrocarbon group having 1 to 10 carbon atoms with or without a substituent can be mentioned. Examples of the monovalent hydrocarbon group having 1 to 10 carbon atoms with or without a substituent are the same as those exemplified above for $R^2$.

The number average molecular weight of organopolysiloxane IV is preferably 100,000 to 900,000, and more preferably 100,000 to 500,000.

The viscosity of 30% by mass toluene-diluted solution of organopolysiloxane IV at 25°C is within the range from 1,000 to 50,000 mPa·s, and more preferably 1,500 to 20,000 mPa·s. When the viscosity of toluene-diluted solution of organopolysiloxane IV is less than the lower limit, adhesion properties to a plastic film is deteriorated. When the viscosity of toluene-diluted solution of organopolysiloxane IV is greater than the upper limit, stability of silicone emulsion is deteriorated.

The amount of the component (D) relative to 100 parts by mass of total amount of the component (A), component (B), component (C) and component (D) is 5 to 30 parts by mass, and more preferable 15 to 25 parts by mass. The amount of the component (D) relative to the total amount of the component (A), component (B), component (C) and component (D) is 5 to 30% by mass, and more preferable 15 to 25% by mass. When the amount of the component (D) is at least as large as the lower limit, the release layer has easy releasing property. When the amount of the component (B) is not more than the upper limit, adhesion properties to a plastic film can be improved.

The amount of the component (D) relative to the total amount of the component (C) and component (D) is 50 to 90% by mass, and more preferably 60 to 80% by mass. When the amount of the component (D) is less than the lower limit or greater than the upper limit, adhesion properties of a plastic film is deteriorated.

As a component (D), one type of organopolysiloxane may be used, or two or more types of organopolysiloxanes may be used in combination.

[Component (E): organohydrogenpolysiloxane V]

Average compositional formula (3) $R^5_hH_iSiO_{(4-h-i)/2}$

A organohydrogenpolysiloxane V as a component (E) is an organohydrogenpolysiloxane V that is represented by the average compositional formula (3) and has at least three hydrogen atoms bonded directly to silicon atoms in one molecule.

$R^5$ in the average compositional formula (3) is a monovalent hydrocarbon group having 1 to 10 carbon atoms with or without a substituent, and does not contain an aliphatic unsaturated bond. Examples of the monovalent hydrocarbon group having 1 to 10 carbon atoms with or without a substituent are the same as those exemplified above for $R^2$. Here, as a "aliphatic unsaturated bond", an alkenyl group having 2 to 8 carbon atoms can be mentioned.

Each of h and i in the average compositional formula (3) is a positive number, provided that, h and i fulfill $h + i \leq 3$. It is preferable that h is $0<h\leq2$, i fulfills $0<i\leq1$, and h + i = 2 or 3.

The amount of the organohydrogenpolysiloxane V is an amount such that molar ratio of the total amount of SiH group within organohydrogenpolysiloxane V relative to the total amount of alkenyl group within the components (A) to (D) (amount of SiH group / amount of alkenyl group) is 1.0 to 3.0, and more preferably 1.2 to 2.0. When the molar

ratio is less than the lower limit, curability is deteriorated. When the molar ratio is greater than the upper limit, peel strength is enhanced, and as a result, release property is impaired. Here, the term "amount of alkenyl group" refers to the total mole number of all alkenyl groups in silicone emulsion. The term "total amount of SiH group" refers to the total mole number of all SiH groups in silicone emulsion.

The viscosity of organohydrogenpolysiloxane V at 25°C is 5 to 2,000 mPa·s, and more preferably 10 to 500 mPa·s. When the viscosity of the component (E) is less than the lower limit, the storage stability of the antistatic release agent is deteriorated. When the viscosity of the component (E) is greater than the upper limit, it becomes difficult to synthesize organohydrogenpolysiloxane V.

As a component (E), one type of organohydrogenpolysiloxane may be used, or two or more types of organohydrogenpolysiloxanes may be used in combination.

(Conductive complex)

A conductive complex contained in the antistatic release agent of the present invention is a complex of a π-conjugated electrically conductive polymer and a polyanion. Specifically, a π-conjugated electrically conductive polymer is coordinated to or doped by part of anion groups of a polyanion to form a complex of π-conjugated electrically conductive polymer and a polyanion.

The amount of the conductive complex relative to 100 parts by mass of the total amount of components (A) to (E) is 0.5 to 100 parts by mass, and preferably 1 to 60 parts by mass. When the amount of the conductive complex is at least as large as the lower limit, antistatic properties can be ensured satisfactorily. When the amount of the conductive complex is not more than the upper limit, release properties can be reliably ensured.

[π-Conjugated Electrically Conductive Polymer]

A π-conjugated electrically conductive polymer is an organic polymer in which the main chain is composed with a π-conjugated system, and examples thereof include polypyrroles, polythiophenes, polyacetylenes, polyphenylenes, polyphenylenevinylenes, polyanilines, polyacenes, polythiophenevinylenes and copolymers thereof. Polypyrroles, polythiophenes and polyanilines are preferable from the viewpoint of ease of synthesis and stability in air. Polythiophenes are more preferable from the viewpoints of compatibility with polar solvents and transparency.

Specific examples of polythiophenes include polythiophene, poly(3-methylthiophene), poly(3-ethylthiophene), poly(3-propylthiophene), poly(3-butylthiophene), poly(3-hexylthiophene), poly(3-heptylthiophene), poly(3-octylthiophene), poly(3-decylthiophene), poly(3-dodecylthiophene), poly(3-octadecylthiophene), poly(3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3,4-dihydroxythiophene), poly(3,4-dimethoxythiophene), poly(3,4-diethoxythiophene), poly(3,4-dipropoxythiophene), poly(3,4-dibutoxythiophene), poly(3,4-dihexyloxythiophene), poly(3,4-diheptyloxythiophene), poly(3,4-dioctyloxythiophene), poly(3,4-didecyloxythiophene), poly(3,4-didodecyloxythiophene), poly(3,4-ethylenedioxythiophene), poly(3,4-propylenedioxythiophene), poly(3,4-butenedioxythiophene), poly(3-methyl-4-methoxythiophene), poly(3-methyl-4-ethoxythiophene), poly(3-carboxythiophene), poly(3-methyl-4-carboxythiophene), poly(3-methyl-4-carboxyethylthiophene) or poly(3-methyl-4-carboxybutylthiophene). Among these, polythiophene, poly(3-methylthiophene), poly(3-methoxythiophene), and poly(3,4-ethylenedioxythiophene) are preferable, and poly(3,4-ethylenedioxythiophene) is more preferable.

Examples of polypyrroles include polypyrrole, poly(N-methylpyrrole), poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,4-dimethylpyrrole), poly(3,4-dibutylpyrrole), poly(3-carboxypyrrole), poly(3-methyl-4-carboxypyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-hexyloxypyrrole), and poly(3-methyl-4-hexyloxypyrrole).

Among these, polypyrrole, poly(N-methylpyrrole) and poly(3-metylpyrrole) are preferable, and polypyrrole is more preferable.

Examples of polyanilines include polyaniline, poly(2-methylaniline), poly(3-isobutylaniline), poly(2-aniline sulfonic acid) and poly(3-aniline sulfonic acid).

Among these, polyaniline and poly(2-anyline sulfonic acid) are preferable, and polyaniline is more preferable.

Among the aforementioned π-conjugated electrically conductive polymers, poly(3-methoxythiophene) and poly(3,4-ethylenedioxythiophene) are particularly preferable, and poly(3,4-ethylenedioxythiophene) is particularly preferable from the viewpoints of electrical conductivity, transparency and heat resistance.

[Polyanion]

The polyanion refers to a polymer containing a structural unit (to also be referred to as a "monomer unit") having an anionic group in a molecule thereof. The anionic group of this polyanion functions as a dopant for the π-conjugated electrically conductive polymer, and improves the electrical conductivity of the π-conjugated electrically conductive polymer.

In one mode of the present invention, the anionic group of the polyanion is preferably a sulfo group or carboxyl group. In addition, the polyanion is preferably a polymer obtained by copolymerizing a monomer unit having the aforementioned sulfo group or carboxyl group.

Specific examples of this polyanion include polystyrene sulfonate, polyvinylsulfonate, polyallylsulfonate, polyacrylsulfonate, polymethacrylsulfonate, poly(2-acrylamide-2-methylpropanesulfonate), polyisoprene sulfonate, polysulfoethyl methacrylate, poly(4-sulfobutylmethacrylate), polymethacryloxybenzene sulfonate, polyvinyl carboxylate, polystyrene carboxylate, polyallylcarboxylate, polyacrylcarboxylate, polymethacrylcarboxylate, poly(2-acrylamide-2-methylpropanecarboxylate), polyisoprene carboxylate or polyacrylic acid. These may be homopolymers or copolymers of two or more types thereof.

Among these, poly(2-acrylamide-2-methylpropanesulfonate), polyisoprene sulfonate, polystyrene sulfonate and polyvinylsulfonate are preferable, and polystyrene sulfonate is particularly preferable.

The degree of polymerization of the polyanion is preferably such that the number of monomer units is within the range of 10 to 100,000, and more preferably within the range of 50 to 10,000, from the viewpoints of dispersibility and electrical conductivity.

The mass average molecular weight of the polyanion is preferably 20,000 to 1,000,000. If the mass average molecular weight of the polyanion is equal to or greater than the aforementioned lower limit, a π-conjugated electrically conductive polymer can be made into a uniform release agent, while if the mass average molecular weight is equal to or less than the aforementioned upper limit, sufficiently high electrical conductivity can be obtained.

The content of the polyanion is preferably within the range of 0.1 moles to 10 moles, and more preferably within the range of 1 mole to 7 moles, based on 1 mole of the π-conjugated electrically conductive polymer. If the content of the polyanion is less than the aforementioned lower limit value, the doping effect on the π-conjugated electrically conductive polymer tends to weaken, thereby resulting in a shortage of electrical conductivity. Moreover, since dispersibility and solubility become low, it becomes difficult to obtain a uniform aqueous solution. In addition, if the content of the polyanion exceeds the aforementioned upper limit value, the content of the π-conjugated electrically conductive polymer decreases, thereby making it difficult to obtain adequate electrical conductivity.

Not all anionic groups in the polyanion dope the π-conjugated electrically conductive polymer, and surplus anionic groups are present. Since these surplus anionic groups are hydrophilic groups, they fulfill the role of improving water dispersibility of the aforementioned complex.

The amount of the surplus anion group relative to the total anon group within a polyanion is preferably 30 to 90 mol%, and more preferably 45 to 75 mol%.

Among these, as a conductive component, it is preferable that a part of the anion group within polystyrene sulfonate as a polyanion is coordinated to and doped to poly(3,4-ethylenedioxythiophene) as a π-conjugated electrically conductive polymer such that the π-conjugated electrically conductive polymer and the polyanion forms a complex. The amount of polystyrene sulfonate relative to 1 mole of poly(3,4-ethylenedioxythiophene) is preferably within the range from 1 to 10 mole, and more preferable 1.5 to 5 mole.

(Conductive improver)

In the antistatic release agent of the present invention may contain a conductive improver.

A conductive improver is at least one compound selected from the group consisting of an acryl compound, a nitrogen-containing aromatic cyclic compound, a compound containing two or more hydroxyl groups, a compound containing two or more carboxyl groups, a compound containing one or more hydroxyl group and one or more carboxyl group, a compound containing an amide group, a compound containing an imide group, a lactam compound, a compound containing a glycidyl group, and water-soluble organic solvent.

[acryl compounds]

Examples of acryl compounds include glycidyl (meth)acrylate, 2-hydroxyethyl (meth)acrylate, 2-hydroxypropyl (meth)acrylate, 4-hydroxybutyl (meth)acrylate, ethyl -α-hydroxymethyl acrylate, and 2-hydroxyethyl acrylamide. Among these, 2-hydroxyethyl (meth)acrylate, 2-hydroxyethyl acrylamide, and glycidyl (meth)acrylate are preferable, and 2-hydroxyethyl acrylamide is more preferred.

[Nitrogen-containing Aromatic Cyclic Compounds]

Examples of this type of nitrogen-containing aromatic cyclic compound include compounds containing a single nitrogen atom such as pyridines and derivatives thereof, compounds containing two nitrogen atoms such as imidazoles and derivatives thereof, pyrimidines and derivatives thereof, and pyrazines and derivatives thereof, and compounds containing three nitrogen atoms such as triazines and derivatives thereof. From the viewpoint of the solubility within solvents, pyridines and derivatives thereof, imidazoles and derivatives thereof, and pyrimidines and derivatives thereof are preferred.

Specific examples of the pyridines and derivatives thereof include pyridine, 2-methylpyridine, 3-methylpyridine, 4-methylpyridine, 4-ethylpyridine, N-vinylpyridine, 2,4-dimethylpyridine, 2,4,6-trimethylpyridine, 3-cyano-5-methylpyridine, 2-pyridinecarboxylic acid, 6-methyl-2-pyridinecarboxylic acid, 4-pyridinecarboxyaldehyde, 4-aminopyridine, 2,3-diaminopyridine, 2,6-diaminopyridine, 2,6-diamino-4-methylpyridine, 4-hydroxypyridine, 4-pyridinemethanol, 2,6-dihydroxypyridine, 2,6-pyridinedimethanol, methyl 6-hydroxynicotinate, 2-hydroxy-5-pyridinemethanol, ethyl 6-hydroxynicotinate, 4-pyridinemethanol, 4-pyridineethanol, 2-phenylpyridine, 3-methylquinoline, 3-ethylquinoline, quinolinol, 2,3-cyclopentenopyridine, 2,3-cyclohexanopyridine, 1,2-di(4-pyridyl)ethane, 1,2-di(4-pyridyl)propane, 2-pyridinecarboxyaldehyde, 2-pyridinecarbonitrile, 2,3-pyridinedicarboxylic acid, 2,4-pyridinedicarboxylic acid, 2,5-pyridinedicarboxylic acid, 2,6-pyridinedicarboxylic acid, and 3-pyridinesulfonic acid.

Among these, pyridine, 2-methylpyridine, 6-methyl-2-pyridinecarboxylic acid are preferable and pyridine is more preferred.

Specific examples of the imidazoles and derivatives thereof include imidazole, 2-methylimidazole, 2-propylimidazole, 2-undecylimidazole, 2-phenylimidazole, N-methylimidazole, N-vinylimidazole, N-allylimidazole, 1-(2-hydroxyethyl)imidazole, (N-hydroxyethylimidazole), 2-ethyl-4-methylimidazole, 1,2-dimethylimidazole, 1-benzyl-2-methylimidazole, 1-benzyl-2-phenylimidazole, 1-cyanoethyl-2-methylimidazole, 1-cyanoethyl-2-ethyl-4-methylimidazole, 2-phenyl-4,5-dihydroxymethylimidazole, 1-acetylimidazole, 4,5-imidazoledicarboxylic acid, dimethyl 4,5-imidazoledicarboxylate, benzimidazole, 2-aminobenzimidazole, 2-aminobenzimidazole-2-sulfonic acid, 2-amino- 1-methylbenzimidazole, 2-hydroxybenzimidazole, and 2-(2-pyridyl)benzimidazole.

Among these, imidazole, 2-methylimidazole and benzimidazole are preferable, and imidazole is more preferred.

Specific examples of the pyrimidines and derivatives thereof include 2-amino-4-chloro-6-methylpyrimidine, 2-amino-6-chloro-4-methoxypyrimidine, 2-amino-4,6-dichloropyrimidine, 2-amino-4,6-dihydroxypyrimidine, 2-amino-4,6-dimethylpyrimidine, 2-amino-4,6-dimethoxypyrimidine, 2-aminopyrimidine, 2-amino-4-methylpyrimidine, 4,6-dihydroxypyrimidine, 2,4-dihydroxypyrimidine-5-carboxylic acid, 2,4,6-triaminopyrimidine, 2,4-dimethoxypyrimidine, 2,4,5-trihydroxypyrimidine, and 2,4-pyrimidinediol.

Among these, 4,6-dihydroxypyrimidine, 2,4-dihydroxypyrimidine-5-carboxylic acid and 2,4-dimethoxypyrimidine are preferable, and 2,4-dimethoxypyrimidine is more preferred.

Examples of the pyrazines and derivatives thereof include pyrazine, 2-methylpyrazine, 2,5-dimethylpyrazine, pyrazinecarboxylic acid, 2,3-pyrazinedicarboxylic acid, 5-methylpyrazinecarboxylic acid, pyrazinamide, 5-methylpyrazinamide, 2-cyanopyrazine, aminopyrazine, 3-aminopyrazine-2-carboxylic acid, 2-ethyl-3-methylpyrazine, 2,3-dimethylpyrazine, and 2,3-diethylpyrazine.

Among these, pyrazine, and pyrazinecarboxylic acid are preferable, and pyrazine is more preferred.

Specific examples of the triazines and derivatives thereof include 1,3,5-triazine, 2-amino-1,3,5-triazine, 3-amino-1,2,4-triazine, 2,4-diamino-6-phenyl-1,3,5-triazine, 2,4,6-triamino-1,3,5-triazine, 2,4,6-tris(trifluoromethyl)-1,3,5-triazine, 2,4,6-tri-2-pyridyl-1,3,5-triazine, 3-(2-pyridyl)-5,6-bis(4-phenylsulfonic acid)-1,2,4-triazine disodium, 3-(2-pyridyl)-5,6-diphenyl-1,2,4-triazine, 3-(2-pyridyl)-5,6-diphenyl-1,2,4-triazine-ρ,ρ'-disulfonic acid disodium, and 2-hydroxy-4,6-dichloro-1,3,5-triazine.

Among these, 1,3,5-triazine and 2,4,6-tri-2-pyridyl-1,3,5-triazine are preferable, and 1,3,5-triazine is more preferred.

[Compounds containing two or more Hydroxyl Groups]

Examples of the compounds containing two or more hydroxyl groups include: polyhydric aliphatic alcohols such as propylene glycol, 1,3-butylene glycol, 1,4-butylene glycol, glycerol, diglycerol, D-glucose, D-glucitol, isoprene glycol, dimethylolpropionic acid, butanediol, 1,5-pentanediol, 1,6-hexanediol, 1,9-nonanediol, neopentyl glycol, trimethylolethane, trimethylolpropane, pentaerythritol, dipentaerythritol, thiodiethanol, glucose, tartaric acid, D-glucaric acid, and glutaconic acid; polymer alcohols such as cellulose, polysaccharides, and sugar alcohols; and aromatic compounds such as 1,4-dihydroxybenzene, 1,3-dihydroxybenzene, 2,3-dihydroxy-1-pentadecylbenzene, 2,4-dihydroxyacetophenone, 2,5-dihydroxyacetophenone, 2,4-dihydroxybenzophenone, 2,6-dihydroxybenzophenone, 3,4-dihydroxybenzophenone, 3,5-dihydroxybenzophenone, 2,4'-dihydroxydiphenylsulfone, 2,2',5,5'-tetrahydroxydiphenylsulfone, 3,3',5,5'-tetramethyl-4,4'-dihydoxydiphenylsulfone, hydroxyquinonecarboxylic acid and salts thereof, 2,3-dihydroxybenzoic acid,

2,4-dihydroxybenzoic acid, 2,5-dihydroxybenzoic acid, 2,6-dihydroxybenzoic acid, 3,5-dihydroxybenzoic acid, 1,4-hydroquinonesulfonic acid and salts thereof, 4,5-hydroxybenzene-1,3-disulfonic acid and salts thereof, 1,5-dihydroxynaphthalene, 1,6-dihydroxynaphthalene, 2,6-dihydroxynaphthalene, 2,7-dihydroxynaphthalene, 2,3-dihydroxynaphthalene, 1,5-dihydroxynaphthalene-2,6-dicarboxylic acid, 1,6-dihydroxynaphthalene-2,5-dicarboxylic acid, 1,5-dihydroxynaphthoic acid, phenyl 1,4-dihydroxy-2-naphthoate, 4,5-dihydroxynaphthalene-2,7-disulfonic acid and salts thereof, 1,8-dihydroxy-3,6-naphthalenedisulfonic acid and salts thereof, 6,7-dihydroxy-2-naphthalenesulfonic acid and salts thereof, 1,2,3-trihydroxybenzene (pyrogallol), 1,2,4-trihydroxybenzene, 5-methyl-1,2,3-trihydroxybenzene, 5-ethyl-1,2,3-trihydroxybenzene, 5-propyl-1,2,3-trihydroxybenzene, trihydroxybenzoic acid, trihydroxyacetophenone, trihydroxybenzophenone, trihydroxybenzaldehyde, trihydroxyanthraquinone, 2,4,6-trihydroxybenzene, tetrahydroxy-p-benzoquinone, tetrahydroxyanthraquinone, methyl gallate, ethyl gallate, and hydroquinone sulfonic acid potassium salt.

Among these, polyhydric aliphatic alcohols such as propylene glycol, glycerol, and pentaerythritol; and aromatic compounds such as 1,2,3-trihydroxybenzene (pyrogallol), trihydroxybenzoic acid, methyl gallate, and ethyl gallate are preferable, and trihydroxybenzoic acid, methyl gallate, and propylene glycol are more preferred.

[Compounds containing two or more Carboxyl Groups]

Examples of the compound containing two or more carboxyl groups include aliphatic carboxylic acid compounds such as maleic acid, fumaric acid, itaconic acid, citraconic acid, malonic acid, 1,4-butanedicarboxylic acid, succinic acid, tartaric acid, adipic acid, D-glucaric acid, glutaconic acid, and citric acid;
aromatic carboxylic acid compounds containing at least one carboxyl group bonded to an aromatic ring, such as phthalic acid, terephthalic acid, isophthalic acid, tetrahydrophthalic anhydride, 5-sulfoisophthalic acid, 5-hydroxyisophthalic acid, methyltetrahydrophthalic anhydride, 4,4'-oxydiphthalic acid, biphenyltetracarboxylic dianhydride, benzophenonetetracarboxylic dianhydride, naphthalenedicarboxylic acid, trimellitic acid, and pyromellitic acid; as well as diglycolic acid, oxydibutyric acid, thiodiacetic acid, thiodibutyric acid, iminodiacetic acid, and iminobutyric acid.

Among these, maleic acid, succinic acid, citric acid, diglycolic acid and thiodiacetic acid are preferable, and maleic acid, diglyclic acid and thiodiacetic acid are more preferred.

[Compounds containing one or more Hydroxyl Groups and one or more Carboxyl Groups]

Examples of the compound containing one or more hydroxyl groups and one or more carboxyl groups include tartaric acid, glyceric acid, dimethylolbutanoic acid, dimethylolpropanoic acid, D-glucaric acid, and glutaconic acid. Among these, tartaric acid and glutaconic acid are preferable, and tartaric acid is more preferred.

[Amide Compounds]

The compounds containing an amide group is one molecule compound containing an amide bond represented by -CO-NH- (CO has a double bond) in the molecule thereof. As the amide compound, a compound which has functional groups at the both terminals of the aforementioned bond, a compound in which a cyclic compound has been bonded to at least one terminal of the aforementioned bond, and a urea or derivatives thereof in which functional groups at the both terminals are hydrogen atoms can be mentioned.

Specific examples of amide compounds include acetamide, malonamide, succinamides, maleamide, fumaramide, benzamide, naphthamide, phthalamide, isophthalamide, terephthalamide, nicotinamide, isonicotinamide, 2-furamide, formamide, N-methylformamide, propionamide, propylolamide, butylamide, isobutylamide, methacrylamide, palmitamide, stearamide, oleamide, oxamide, glutaramide, adipamide, cinnamamide, glycolamide, lactamide, glyceramide, tartaramide, citramide, glyoxylamide, pyruvamide, acetoacetamide, dimethylacetamide, benzylamide, anthranylamide, ethylenediaminetetraacetamide, diacetamide, triacetamide, dibenzamide, tribenzamide, rhodanine, urea, 1-acetyl-2-thiourea, biuret, butylurea, dibutylurea, 1,3-dimethylurea, 1,3-diethylurea and derivatives thereof. Among these, acetamide and glycolamide are preferable, and glycolamide is more preferred.

As an amide compound, acrylamides can be used. As an acrylamide, N-methylacrylamide, N-methylmethacrylaide, N-ethylacrylamide, N-ethylmethacrylamide, N,N-dimethylacrylamide, N,N-dimethylmethacrylamide, N,N-diethylacrylamide, N,N-diethylmethacrylamide, 2-hydroxyethylacrylamide, 2-hydroxyethylmethacrylamide, N-methylolacrylamide, N-methylolmethacrylamide and the like can be mentioned. Among these, N-methylacrylamide and N-methylolacrylamide are preferred.

The molecular weight of amide compound is preferably 46 to 10,000, more preferably 46 to 5,000, and particularly preferably 46 to 1,000.

[Imide Compounds]

As an amide compound, in terms of high conductivity, a single molecular compound containing an imide bond is preferably employed (hereinafter, referred to as imide compound). As an imide compound, based on the skeleton, phthalimide and phthalimide derivatives, succinimide, succinimide derivatives, benzimide, benzimide derivatives, maleimide, maleimide derivatives, naphthalimide, naphthalimide derivatives and the like can be mentioned.

The imide compound is classified based on functional groups at the both terminals thereof into an aliphatic imide compound or an aromatic imide compound. In terms of solubility, an aliphatic imide compound is preferable.

The aliphatic imide compound is classified into a saturated aliphatic imide compound which has a saturated bond between carbon atoms within the molecule and an unsaturated aliphatic imide compound which has an unsaturated bond between carbon atoms within the molecule.

The saturated aliphatic imide compound is a compound represented by $R^{1-}$CO-NH-CO-$R^2$, and both $R^1$ and $R^2$ are saturated hydrocarbon groups. Specific examples include cyclohexane-1,2-dicarboximide, allantoin, hydantoin, barbituric acid, alloxan, glutarimide, succinimide, 5-butylhydantoin acid, 5,5-dimethylhydantoin, 1-methylhydantoin, 1,5,5-trimethylhydantoin , 5-hydantoin acetic acid, n-hydroxy-5-norbornene-2,3-dicarboximide, semicarbazide, $\alpha,\alpha$-dimethyl-6-methyl-succinimide, bis [2-(succinimidoxycarbonyloxy)ethyl]sulfone, $\alpha$ -methylpropyl-$\alpha$-succinimide, cyclohexylimide and the like. Among these, succinimide and 5-hydantoin acetic acid are preferable, and succinimide is more preferable.

The unsaturated aliphatic imide compound is a compound represented by $R^{1-}$CO-NH-CO-$R^2$, and one or both of $R^1$ and $R^2$ is at least one unsaturated hydrocarbon group. Specific examples include 1,3-propylene urea, maleimide, N-methyl maleimide, N-ethylmaleimide, N-hydroxy maleimide, 1,4-bismaleimidobutane, 1,6-bismaleimidohexane, 1,8-bismaleimidooctane, N-carboxyheptyl maleimide and the like. Among these, maleimide and N-hydroxy maleimide are preferable, and maleimide is more preferable.

The molecular weight of the imide compound is preferably 60 to 5,000, more preferably 70 to 1,000, and particularly preferably 80 to 500.

[Lactam Compounds]

A lactam compound is an intramolecular cyclic amide of an aminocarboxylic acid, and is a compound in which a portion of the ring can be represented by -CO-NR-(wherein R is a hydrogen atom or an arbitrary substituent). One or more of the carbon atoms within the ring may be unsaturated or substituted for a hetero atom.

Examples of the lactam compound include pentano-4-lactam, 4-pentanelactam-5-methyl-2-pyrrolidone, 5-methyl-2-pyrrolidinone, hexano-6-lactam, and 6-hexanelactam.

Among these, pentane-4-lactam and 5-methyl-2-pyrrolidinone are preferable, and 5-methyl-2-pyrrolidinone is more preferable.

[Compounds containing a Glycidyl Group]

Examples of the compound containing a glycidyl group include glycidyl compounds such as ethyl glycidyl ether, butyl glycidyl ether, t-butyl glycidyl ether, allyl glycidyl ether, benzyl glycidyl ether, glycidyl phenyl ether, bisphenol A diglycidyl ether, glycidyl acrylate, and glycidyl methacrylate.

Among these, ethyl glycidyl ether, butyl glycidyl ether and glycidiy acrylate are preferable, and ethyl glycidyl ether is more preferable.

[Water-Soluble Organic Solvent]

Examples of water-soluble organic solvents include polar solvents such as N-methyl-2-pyrrolidone, N-methylacetamide, N,N-dimethylformamide, N,N-dimethylacetamide, dimethylsulfoxide, hexamethylenephosphortriamide, N-vinylpyrrolidone, N-vinylformamide and N-vinylacetamide; phenols such as cresol, phenol and xylenol; polyhydric aliphatic alcohols such as ethylene glycol, propylene glycol, dipropylene glycol, 1,3-butylene glycol, 1,4-butylene glycol, polyethylene glycol, D-glucose, D-glucitol, isoprene glycol, butanediol, 1,5-pentanediol, 1,6-hexanediol, 1,9-nonanediol, and neopentyl glycol; carbonate compounds such as ethylene carbonate and propylene carbonate; ether compounds such as dioxane and diethyl ether; chain-like ethers such as dialkyl ethers, propylene glycol dialkyl ethers, polyethylene glycol dialkyl ethers, and polypropylene glycol dialkyl ethers; heterocyclic compounds such as 3-methyl-2-oxazolidinone; and nitrile compounds such as acetonitrile, glutarodinitrile, methoxyacetonitrile, propionitrile, and benzonitrile.

Among these, dimethylsulfoxide, ethylene glycol and polyethylene glycol are preferable.

These solvents may be used either alone, or as mixtures containing two or more different solvents.

As a conductive improver, 2-hydroxyethylacrylamide, imidazole, trihydroxybenzoic acid, methyl gallate, diglycolic acid, thiodiacetic acid, dimethyl sulfoxide, ethylene glycol and polyethylene glycol are preferable.

The amount of the conductive improver relative to 100 parts by mass of the total amount of the components (A) to (E) is preferably 1 to 10,000 parts by mass, and more preferably 10 to 8,000 parts by mass.

When the amount of the conductive improver is at least as large as the lower limit, the improvement effect in conductivity due to addition of the conductive improver can be ensured satisfactorily. When the amount of the conductive improver is not more than the upper limit, deterioration of conductivity caused by reduction of the concentration of $\pi$-conjugated electrically conductive polymer is less likely to occur and embrittlement and softening of the coating film can be suppressed.

(Surfactants)

The antistatic release agent may contain a surfactant. As a surfactant, nonionic surfactants, cationic surfactants and anionic surfactants can be mentioned, and in terms of stability of silicone emulsion and wettability to a plastic film, nonionic surfactants are preferably used. When an ionic surfactants is used, it is preferable that the ionic surfactant is used in combination with a nonionic surfactant.

Examples of cationic surfactants include alkylamine salt, monoalkylammonium salt and dialkylammonium salt and quaternary ammonium salt such as polyoxyethylene alkylammonium salt and the like.

Examples of anionic surfactants include alkyl sulfate, methyl taurate, alpha olefin sulfonate salts, and alkylbenzene sulfonic acid and salts thereof, alkylpolyoxyethylene ether sulfate ester salts, and alkylnaphthylsulfonic acid and salts thereof, alaninate and salts thereof, sulfosuccinate, and fatty acids and salts thereof, alkyl sulfates, and the like. Examples of nonionic surfactants include polyoxyethylene alkyl ethers, polyoxyethylene polyoxypropylene alkyl ethers, polyoxyethylene higher fatty acid esters, sorbitan fatty acid esters, glycerin higher fatty acid esters and the like. Specific examples include alkyl ether type such as polyoxyethylene decyl ether, polyoxyethylene lauryl ether, polyoxyethylene tridecyl ether, polyoxyethylene tetradecyl ether, polyoxyethylene cetyl ether, polyoxyethylene stearyl ether; and alkyl ester type such as polyoxyethylene oleate and polyoxyethylene laurate. Among these, alkyl ether type is preferable, and polyoxyethylene decyl ether, polyoxyethylene lauryl ether, polyoxyethylene tridecyl ether, and polyoxyethylene tetradecyl ether are more preferable, and polyoxyethylene lauryl ether is still more preferable.

The nonionic surfactant may be used alone or two or more types may be used in a combination.

In terms of improvement in stability of the antistatic release agent, HLB value of surfactant is preferably 10 to 15. When a plurality of surfactants is used, the HLB value is a mass average value based on HLB value of each of surfactants. In the present invention, HLB value is a value calculated in accordance with Griffin equation represented by following equation:

$$\text{HLB} = \text{molecular weight of portion composed of polyoxyethylene} / \text{molecular weight of polyoxyethylene alkyl ether} \times 20.$$

It is preferable that the amount of surfactant is adjusted to the minimum amount required to ensure stability of silicone emulsion and wettability to a plastic film satisfactorily. Specifically, the amount of surfactant relative to 100 parts by mass of total amount of the components (A) to (E) is preferably 0.1 to 20 parts by mass, and more preferably 0.5 to 15 parts by mass. When the amount of the surfactant is at least as large as the lower limit, stability of silicone emulsion is further improved. When the amount of the surfactant is greater than the upper limit, curability of silicone emulsion may be deteriorated.

[Water-soluble resins]

In order to facilitate the emulsification and to improve stability, a water-soluble resin with may be used with a surfactant in combination. As a water-soluble resin, polyvinyl alcohol can be mentioned. When a platinum group metal-based catalyst may be incorporated, it is preferable that a water-soluble resin that has little catalyst poison effect relative to the platinum group metal-based catalyst is selected.

As well as the surfactant, it is preferable that the amount of water-soluble resin is adjusted to the minimum amount required to ensure stability of silicone emulsion and wettability to a plastic film satisfactorily. Specifically, the amount of water-soluble resin relative to 100 parts by mass of total amount of the components (A) to (E) is preferably 0.1 to 20 parts by mass, and more preferably 1 to 10 parts by mass.

[Platinum group metal-based catalysts]

The antistatic release agent of the present invention may contain a platinum group metal-based catalyst in order to accelerate addition reaction. As a platinum group metal-based catalyst, conventional addition reaction catalysts such as platinum-based addition reaction catalysts, palladium-based addition reaction catalysts, and rhodium-based addition reaction catalysts may be used. Among these, a platinum-based catalyst is preferably used. As a platinum-based catalyst, chloroplatinic acid, an alcohol solution of chloroplatinic acid, an aldehyde solution of chloroplatinic acid, and a complex of olefin or vinyl siloxane with chloroplatinic acid can be mentioned. Among these, a platinum-vinyl siloxane complex or an emulsion of a platinum-vinyl siloxane complex is preferable, and an emulsion of a platinum-vinyl siloxane complex is more preferable.

The minimum amount of the platinum group metal-based catalyst is an amount sufficient to function as a catalyst. Specifically, the amount of the platinum group metal-based catalyst relative to 100 parts by mass of the total amount of the component (A) to (E) is preferably within the range of 1 to 1,000 ppm. When the amount of the platinum group metal-based catalyst is at least as large as the lower limit, a release agent layer can be formed easily. When the amount of the platinum group metal-based catalyst is not more than the upper limit, cost can be reduced.

[Water]

The antistatic release agent of the present invention contains water for dilution.

As water, any types of water can be used as long as the impurity concentration is within the range of the tap water. Water containing strong acid, strong alkali, a large amount of alcohol or salts is not suitable for use, since stability of emulsion is deteriorated.

The amount of water is adjusted so that viscosity becomes suitable for using coating machine at the time of applying the antistatic release agent, and a targeted coating amount can be obtained. The amount of water relative to 100 parts by mass of the total amount of components (A) to (E) is preferably 50 to 100,000 parts by mass, and more preferably 100 to 10,000 parts by mass. When the amount of water is at least as large as the lower limit, an O/W type emulsion can be obtained easily. When the amount of water is not more than the upper limit, stability can be further improved.

[Other optional components]

As other than the above components, any other optional components, for example, catalytic activity inhibitors that suppress catalytic activity of the platinum group metal-based catalyst, leveling agents that control release properties, thickeners, an antioxidant, a ultraviolet absorber and the like may be incorporated. It is preferable that antioxidants and ultraviolet absorbers are used in combination.

As a catalytic activity inhibitor, various organic nitrogen compounds, organic phosphorus compounds, acetylene derivatives, oxime compounds, organohalides and the like can be mentioned. Among these, acetylene derivatives are preferred. As acetylene derivatives, ethynylcyclohexanol, 3-methyl-1-butyn-3-ol, 3-methyl-1-pentyn-3-ol, 3,5-dimethyl-1-hexin-3-ol, 3-methyl-3-trimethylsiloxy-1-butyne, 3-methyl-3-trimethylsiloxy-1-pentyne, 3,5-dimethyl-3-trimethylsiloxy-1-hexyne, 1-ethynyl-1-trimethylsiloxycyclohexane and bis (2,2-dimethyl-3-butynoxy)dimethylsilane are preferable, and ethynylcyclohexanol, 3-methyl-1-butyn-3-ol, 3-methyl-1-pentyne-3-ol and 3,5-dimethyl-1-hexin-3-ol are more preferable.

As leveling agents, a silicone resin, silica, an organopolysiloxane having no alkenyl groups or no hydrogen atoms bonded to silicon atoms, a fluorine-based surfactant and the like can be mentioned.

As thickeners, water-soluble polymers such as methyl cellulose, carboxymethyl cellulose, hydroxymethyl cellulose, polyvinylpyrrolidone, alginates, xanthan gum, acrylic acid polymers, polyvinyl alcohol and the like can be mentioned. Among these, polyvinyl alcohol is preferable, and a polyvinyl alcohol aqueous solution is more preferably used.

As antioxidants, phenolic antioxidants, amine-based antioxidants, phosphorus-based antioxidants, sulfur-based antioxidants, sugars, vitamins and the like can be mentioned.

As ultraviolet absorbers, benzotriazole-based ultraviolet absorbers, benzophenone-based ultraviolet absorbers, salicylate-based ultraviolet absorbers, cyanoacrylate-based ultraviolet absorbers, oxanilide-based ultraviolet absorbers, hindered amine-based ultraviolet absorbers, benzoate-based ultraviolet absorber and the like can be mentioned.

The amount of the optional component is within a range not to impair the effects of the present invention.

The antistatic release agent of the present invention preferably includes: a silicone emulsion which contains components (A) to (E) shown below; and a conductive complex of poly(3,4-ethylenedioxythiophene) and polystyrene sulfonate:

Component (A): organopolysiloxane I which has viscosity of 5 to 100 mPa·s at 25°C and which is represented by the average compositional formula (1) shown below;

[Chemical Formula 4]

Average compositional formula (1)

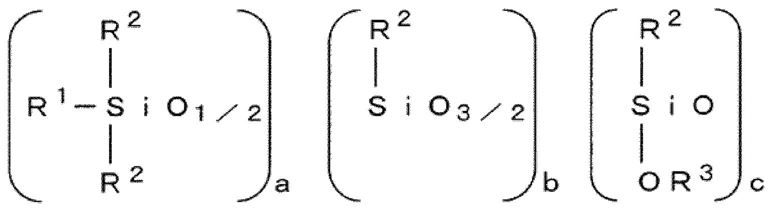

in the formula, $R^1$ represents a vinyl group, an allyl group or a pentenyl group; $R^2$ represents a methyl group; $R^3$ represents a methyl group; a and b each represents an integer; c represents an integer of 0 to 10, provided that, a, b and c fulfill $(b+c)/a = 0.6$ to 1.5, and $0 \leq c/(b+c) \leq 0.05$:

Component (B): organopolysiloxane II which has viscosity of 30 to 10,000 mPa·s at 25°C and which is represented by the average compositional formula (2) shown below;

[Chemical Formula 5]

Average compositional formula (2)

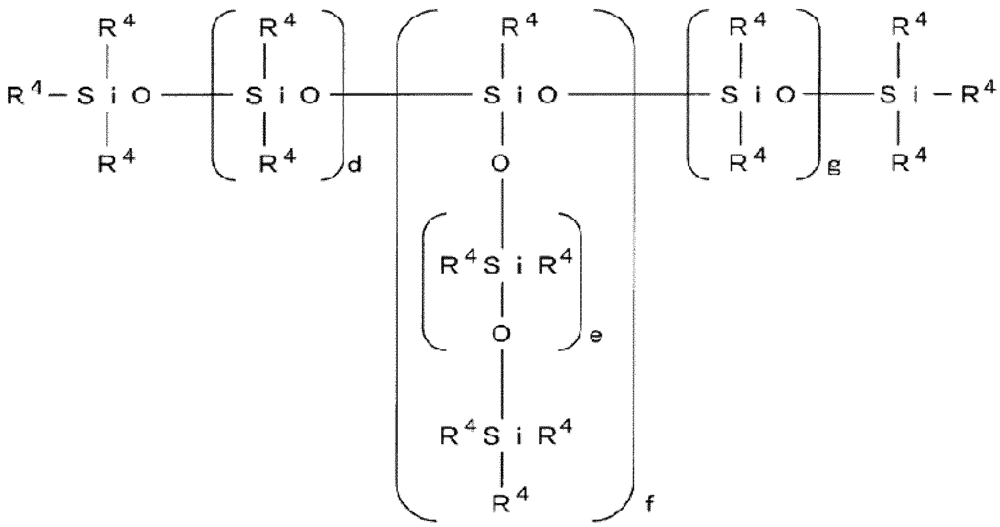

in the formula, $R^4$ represents a vinyl group or a methyl group, each $R^4$ may be the same or different, provided that, at least two of $R^4$ represents vinyl groups; d, g and e each represents an integer of 0 or more; f represents an integer of 0 to 10, provided that f fulfills $0 \leq f \leq 10$; and each of d, e, f and g is an integer such that the viscosity of organopolysiloxane II is 30 to 10,000 mPa·s at 25°C:

Component (C): organopolysiloxane III which has viscosity of 30% by mass toluene-diluted solution of 1,000 to 50,000 mPa·s at 25°C, and has a vinyl group as an alkenyl group and has an alkenyl value of 0.01 mol/100g or more:

Component (D): organopolysiloxane IV which has viscosity of 30% by mass toluene-diluted solution of 1,000 to 50,000 mPa·s at 25°C and has an alkenyl group as a vinly group and has a phenyl group as an aryl group, and has an alkenyl value of 0.0002 mol/100g or more and less than 0.01 mol/100g, wherein the amount of aryl group relative to the total organic groups is 0.5 to 10 mol%:

Component (E): organohydrogenpolysiloxane V which is represented by average compositional formula (3) shown below, and has three hydrogen atoms bonded directly to silicon atoms in one molecule, and has viscosity of 5 to 2,000 mPa·s at 25°C;

Average compositional formula (3) $R^5_hH_iSiO_{(4-h-i)/2}$

in the formula, $R^5$ represents a methyl group, and does not contain a aliphatic unsaturated bond; and h and i each represents an integer and fulfills h+i≤3.

The antistatic release agent of the present invention preferably includes: a silicone emulsion which contains components (A) to (E) shown below; and a conductive complex of poly(3,4-ethylenedioxythiophene) and polystyrene sulfonate: Component (A): organopolysiloxane I which has viscosity of 5 to 100 mPa·s at 25°C and which is represented by the average compositional formula (1) shown below;

[Chemical Formula 6]

Average compositional formula (1)

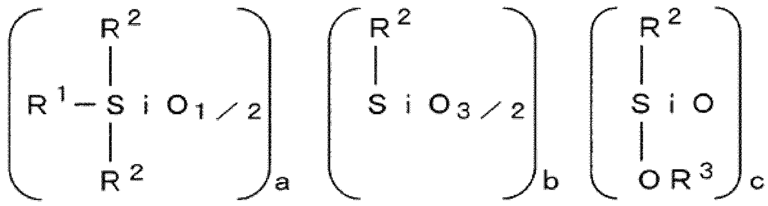

in the formula, $R^1$ represents a vinyl group; $R^2$ represents a methyl group; $R^3$ represents a methyl group; a and b each represents an integer; c represents an integer of 0 to 10, provided that, a, b and c fulfill (b+c)/a = 0.6 to 1.5, and 0≤c/(b+c)≤0.05: Component (B): organopolysiloxane II which has viscosity of 30 to 10,000 mPa·s at 25°C and which is represented by the average compositional formula (2) shown below;

[Chemical Formula 7]

Average compositional formula (2)

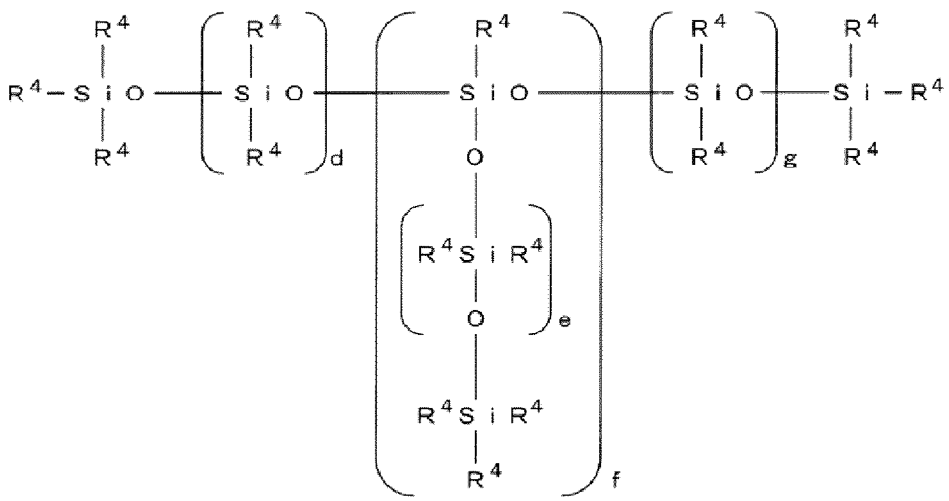

in the formula, $R^4$ represents a vinyl group or a methyl group, each $R^4$ may be the same or different, provided that, at least two $R^4$ at the both terminals of the main chain are vinyl groups; d, g and e each represents an integer of 0 or more; f represents an integer of 0 to 10, provided that f fulfills 0≤f≤10; and each of d, e, f and g is an integer such that the viscosity of organopolysiloxane II becomes 30 to 10,000 mPa·s at 25°C: Component (C): organopolysiloxane III which has viscosity of 30% by mass toluene-diluted solution of 1,000 to 50,000 mPa·s at 25°C, and has a vinyl group as an alkenyl group and has an alkenyl value of 0.01 mol/100g or more: Component (D): organopolysiloxane IV which has

viscosity of 30% by mass toluene-diluted solution of 1,000 to 50,000 mPa·s at 25°C, has a vinyl group as an alkenyl group, has a phenyl group as an aryl group, and has an alkenyl value of 0.0002 mol/100g or more and less than 0.01 mol/100g, wherein the amount of aryl group relative to the total organic groups is 0.5 to 10 mol%:

Component (E): organohydrogenpolysiloxane V which is represented by average compositional formula (3) shown below, and has three hydrogen atoms bonded directly to silicon atoms in one molecule, and has viscosity of 5 to 2,000 mPa·s at 25°C;

Average compositional formula (3) $R^5_hH_iSiO_{(4-h-i)/2}$

in the formula, $R^5$ represents a methyl group and does not contain an aliphatic unsaturated bond; and h and i each represents an integer and fulfill h+i≤3.

The antistatic release agent of the present invention preferably includes: a silicone emulsion which contains components (A) to (E) shown below; and a conductive complex of poly(3,4-ethylenedioxythiophene) and polystyrene sulfonate; Component (A): organopolysiloxane I which has viscosity of 10 to 80 mPa·s at 25°C, has a vinyl value of 0.45 to 0.75 mol/100g, and is represented by the average compositional formula (1) shown below;

[Chemical Formula 8]

Average compositional formula (1)

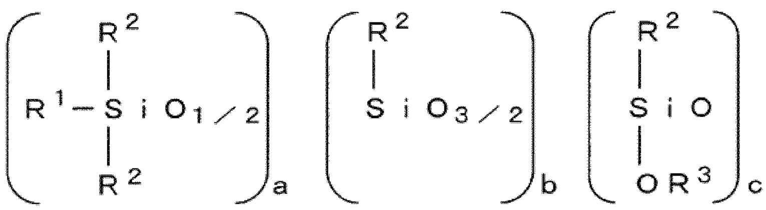

in the formula, $R^1$ represents a vinyl group; $R^2$ represents a methyl group; $R^3$ represents a methyl group; a and b each represents an integer; c represents an integer of 0 to 10, provided that, a, b and c fulfill (b+c)/a = 0.6 to 1.5, and 0≤c/(b+c)≤0.05: Component (B): organopolysiloxane II which has viscosity of 60 to 5,000 mPa·s at 25°C, has a vinyl value of 0.003 to 0.1 mol/100g, and is represented by the average compositional formula (2) shown below;

[Chemical Formula 9]

Average compositional formula (2)

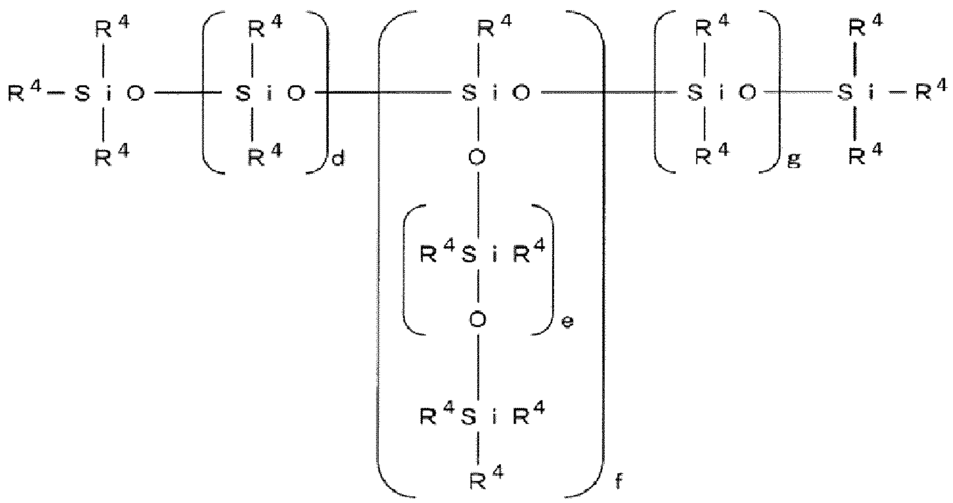

in the formula, $R^4$ represents a vinyl group or a methyl group, each $R^4$ may be the same or different, provided that, at least two $R^4$ at the both terminals of the main chain are vinyl groups; d, g and e each represents an integer of 0 or more; f represents an integer of 0 to 10, provided that f fulfills $0 \leq f \leq 10$; and each of d, e, f and g is an integer such that the viscosity of organopolysiloxane II becomes 60 to 5,000mPa·s at 25°C: Component (C): organopolysiloxane III which has viscosity of 30% by mass toluene-diluted solution of 1,500 to 2,000 mPa·s at 25°C, has a vinyl group as an alkenyl group and has an alkenyl value of 0.01 to 0.10 mol/100g: Component (D): organopolysiloxane IV which has viscosity of 30% by mass toluene-diluted solution of 1,500 to 2,000 mPa·s at 25°C, has a vinyl group as an alkenyl group, has a phenyl group as a aryl group, and has an alkenyl value of 0.0015 to 0.005 mol/100g, wherein the amount of aryl group relative to the total organic groups is 1.0 to 3.0 mol%:
Component (E): organohydrogenpolysiloxane V which is represented by average compositional formula (3) shown below, and has three hydrogen atoms bonded directly to silicon atoms in one molecule, and has viscosity of 10 to 500 mPa·s at 25°C;

Average compositional formula (3) $R^5_h H_i SiO_{(4-h-i)/2}$

in the formula, $R^5$ represents a methyl group and does not contain a aliphatic unsaturated bond; and h and i each represents an integer and fulfills $h+i \leq 3$.

The antistatic release agent of the present invention preferably includes: a silicone emulsion which contains components (A) to (E) shown below; at least one surfactant selected from the group consisting of polyoxyethylene lauryl ether and polyoxyethylene oleate; and a conductive complex of poly(3,4-ethylenedioxythiophene) and polystyrene sulfonate:
Component (A): organopolysiloxane I which has viscosity of 10 to 80 mPa·s at 25°C, has a vinyl value of 0.45 to 0.75 mol/100g, and is represented by the average compositional formula (1) shown below;

[Chemical Formula 10]

Average compositional formula (1)

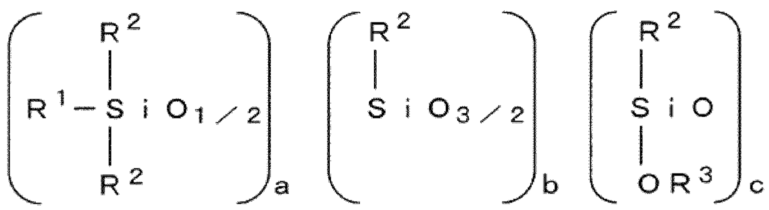

in the formula, $R^1$ represents a vinyl group; $R^2$ represents a methyl group; $R^3$ represents a methyl group; a and b each represents an integer; c represents an integer of 0 to 10, provided that, a, b and c fulfill $(b+c)/a = 0.6$ to $1.5$, and $0 \leq c/(b+c) \leq 0.05$:
Component (B): organopolysiloxane II which has viscosity of 60 to 5,000 mPa·s at 25°C, has a vinyl value of 0.003 to 0.1 mol/100g, and is represented by the average compositional formula (2) shown below;

[Chemical Formula 11]

Average compositional formula (2)

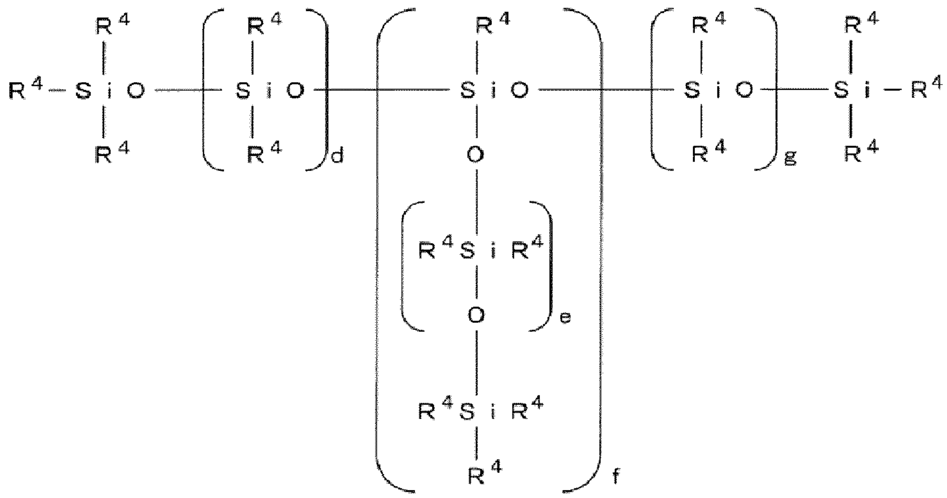

in the formula, $R^4$ represents a vinyl group or a methyl group, each $R^4$ may be the same or different, provided that, at least two $R^4$ at the both terminals of the main chain are vinyl groups; d, g and e each represents an integer of 0 or more; f represents an integer of 0 to 10, provided that f fulfills $0 \leq f \leq 10$; and each of d, e, f and g is an integer such that the viscosity of organopolysiloxane II becomes 30 to 10,000 mPa·s at 25°C: Component (C): organopolysiloxane III which has viscosity of 30% by mass toluene-diluted solution of 1,500 to 2,000 mPa·s at 25°C, and has a vinyl group as an alkenyl group and has an alkenyl value of 0.01 to 0.10 mol/100g: Component (D): organopolysiloxane IV which has viscosity of 30% by mass toluene-diluted solution of 1,500 to 2,000 mPa·s at 25°C , has a vinyl group as an alkenyl group, has a phenyl group as a aryl group, and has an alkenyl value of 0.0015 to 0.005 mol/100g, wherein the amount of aryl group relative to the total organic groups is 1.0 to 3.0 mol%:

Component (E): organohydrogenpolysiloxane V which is represented by average compositional formula (3) shown below, and has three hydrogen atoms bonded directly to silicon atoms in one molecule, and has viscosity of 10 to 500 mPa·s at 25°C;

Average compositional formula (3) $R^5{}_hH_iSiO_{(4-h-i)/2}$

in the formula, $R^5$ represents a methyl group and does not contain a aliphatic unsaturated bond; and h and i each represents an integer and fulfills $h+i \leq 3$.

The antistatic release agent of the present invention preferably includes: a silicone emulsion which contains components (A) to (E) shown below; at least one surfactant selected from the group consisting of polyoxyethylene lauryl ether and polyoxyethylene oleate; at least one thickener selected from the group consisting of methyl cellulose, carboxymethyl cellulose and polyvinyl alcohol; and a conductive complex of poly(3,4-ethylenedioxythiophene) and polystyrene sulfonate:

Component (A): organopolysiloxane I which has viscosity of 10 to 80 mPa·s at 25°C, has a vinyl value of 0.45 to 0.75 mol/100g, and is represented by the average compositional formula (1) shown below;

[Chemical Formula 12]

Average compositional formula (1)

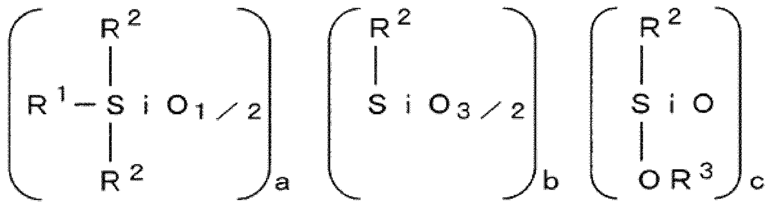

in the formula, $R^1$ represents a vinyl group; $R^2$ represents a methyl group; $R^3$ represents a methyl group; a and b each represents an integer; c represents an integer of 0 to 10, provided that, a, b and c fulfill $(b+c)/a = 0.6$ to 1.5, and $0 \leq c/(b+c) \leq 0.05$:

Component (B): organopolysiloxane II which has viscosity of 60 to 5,000 mPa·s at 25°C, has a vinyl value of 0.003 to 0.1 mol/100g, and is represented by the average compositional formula (2) shown below;

[Chemical Formula 13]

Average compositional formula (2)

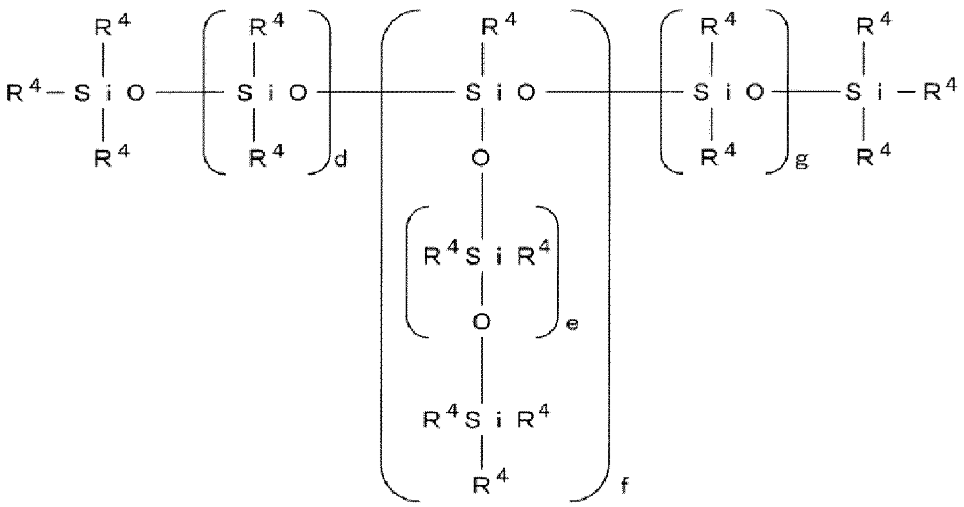

in the formula, $R^4$ represents a vinyl group or a methyl group, each $R^4$ may be the same or different, provided that, at least two $R^4$ at the both terminals of the main chain are vinyl groups; d, g and e each represents an integer of 0 or more; f represents an integer of 0 to 10, provided that f fulfills $0 \leq f \leq 10$; and each of d, e, f and g is an integer such that the viscosity of organopolysiloxane II becomes 30 to 10,000 mPa·s at 25°C:

Component (C): organopolysiloxane III which has viscosity of 30% by mass toluene-diluted solution of 1,500 to 2,000 mPa·s at 25°C, and has a vinyl group as an alkenyl group and has an alkenyl value of 0.01 to 0.10 mol/100g:

Component (D): organopolysiloxane IV which has viscosity of 30% by mass toluene-diluted solution of 1,500 to 2,000 mPa·s at 25°C, has a vinyl group as an alkenyl group, has a phenyl group as an aryl group, and has an alkenyl value of 0.0015 to 0.005 mol/100g, wherein the amount of aryl group relative to the total organic groups is 1.0 to 3.0 mol%:

Component (E): organohydrogenpolysiloxane V which is represented by average compositional formula (3) shown below, and has three hydrogen atoms bonded directly to silicon atoms in one molecule, and has viscosity of 10 to 500 mPa·s at 25°C;

Average compositional formula (3) $R^5_hH_iSiO_{(4-h-i)/2}$

in the formula, $R^5$ represents a methyl group and does not contain a aliphatic unsaturated bond; and each of h and i represents an integer and fulfills $h+i \leq 3$.

The antistatic release agent of the present invention preferably includes: a silicone emulsion which contains components (A) to (E) shown below; at least one surfactant selected from the group consisting of polyoxyethylene lauryl ether and polyoxyethylene oleate; at least one thickener selected from the group consisting of methyl cellulose, carboxymethyl cellulose and polyvinyl alcohol; at least one catalytic activity inhibitor selected from the group consisting of ethynylcyclohexanol, 3-methyl-1-butyn-3-ol, 3-methyl-1-pentyn-3-ol, and 3,5-dimethyl-1-hexin-3-ol; and a conductive complex of poly(3,4-ethylenedioxythiophene) and polystyrene sulfonate:

Component (A): organopolysiloxane I which has viscosity of 10 to 80 mPa·s at 25°C, has a vinyl value of 0.45 to 0.75 mol/100g, and is represented by the average compositional formula (1) shown below;

[Chemical Formula 14]

Average compositional formula (1)

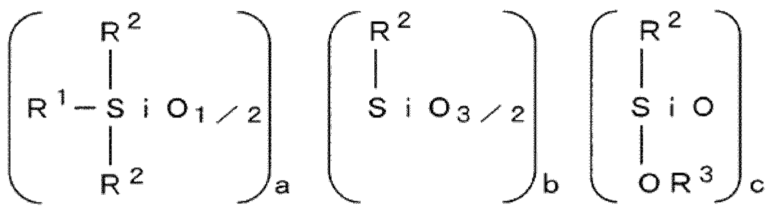

in the formula, $R^1$ represents a vinyl group; $R^2$ represents a methyl group; $R^3$ represents a methyl group; a and b each represents an integer; c represents an integer of 0 to 10, provided that, a, b and c fulfill $(b+c)/a = 0.6$ to 1.5, and $0 \leq c/(b+c) \leq 0.05$:

Component (B): organopolysiloxane II which has viscosity of 60 to 5,000 mPa·s at 25°C, has a vinyl value of 0.003 to 0.1 mol/100g, and is represented by the average compositional formula (2) shown below;

[Chemical Formula 15]

Average compositional formula (2)

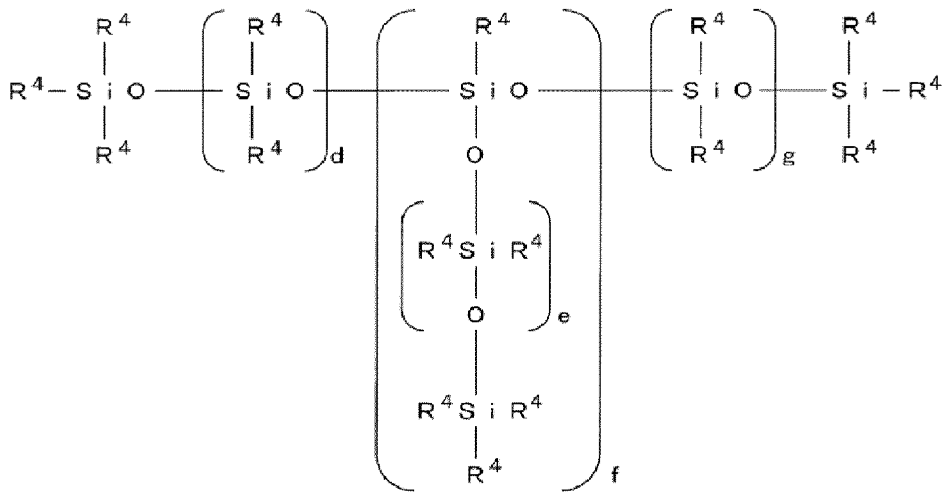

in the formula, $R^4$ represents a vinyl group or a methyl group, each $R^4$ may be the same or different, provided that, at least two $R^4$ at the both terminals of the main chain are vinyl groups; d, g and e each represents an integer of 0 or more; f represents an integer of 0 to 10, provided that f fulfills $0 \leq f \leq 10$; and each of d, e, f and g is an integer such that the

viscosity of organopolysiloxane II becomes 30 to 10,000 mPa·s at 25°C:
Component (C): organopolysiloxane III which has viscosity of 30% by mass toluene-diluted solution of 1,500 to 2,000 mPa·s at 25°C, and has a vinyl group as an alkenyl group and has an alkenyl value of 0.01 to 0.10 mol/100g:
Component (D): organopolysiloxane IV which has viscosity of 30% by mass toluene-diluted solution of 1,500 to 2,000 mPa·s at 25°C, has a vinyl group as an alkenyl group, has a phenyl group as a aryl group, and has an alkenyl value of 0.0015 to 0.005 mol/100g, wherein the amount of aryl group relative to the total organic groups is 1.0 to 3.0 mol%:
Component (E): organohydrogenpolysiloxane V which is represented by average compositional formula (3) shown below, and has three hydrogen atoms bonded directly to silicon atoms in one molecule, and has viscosity of 10 to 500 mPa·s at 25°C;

Average compositional formula (3) $R^5_hH_iSiO_{(4-h-i)/2}$

in the formula, $R^5$ represents a methyl group and does not contain an aliphatic unsaturated bond; and each of h and i represents an integer and fulfills $h+i \leq 3$.

The antistatic release agent of the present invention preferably includes: a silicone emulsion which contains components (A) to (E) shown below; at least one surfactant selected from the group consisting of polyoxyethylene lauryl ether and polyoxyethylene oleate; at least one thickener selected from the group consisting of methyl cellulose, carboxymethyl cellulose and polyvinyl alcohol; at least one catalytic activity inhibitor selected from the group consisting of ethynylcyclohexanol, 3-methyl-1-butyn-3-ol, 3-methyl-1-pentyn-3-ol, and 3,5-dimethyl-1-hexin-3-ol; at least one conductive improver selected from the group consisting of 2-hydroxyethylacrylamide, imidazole, trihydroxybenzoic acid, methyl gallate, diglycolic acid, thiodiacetic acid, dimethyl sulfoxide, ethylene glycol and polyethylene glycol; and a conductive complex of poly(3,4-ethylenedioxythiophene) and polystyrene sulfonate:
Component (A): organopolysiloxane I which has viscosity of 10 to 80 mPa·s at 25°C, has a vinyl value of 0.45 to 0.75 mol/100g, and is represented by the average compositional formula (1) shown below;

[Chemical Formula 16]

Average compositional formula (1)

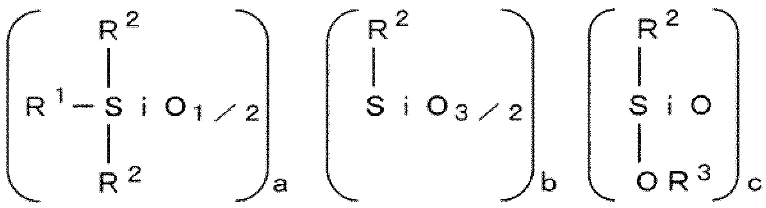

in the formula, $R^1$ represents a vinyl group; $R^2$ represents a methyl group; $R^3$ represents a methyl group; a and b each represents an integer; c represents an integer of 0 to 10, provided that, a, b and c fulfill (b+c)/a = 0.6 to 1.5, and $0 \leq c/(b+c) \leq 0.05$:
Component (B): organopolysiloxane II which has viscosity of 60 to 5,000 mPa·s at 25°C, has a vinyl value of 0.003 to 0.1 mol/100g, and is represented by the average compositional formula (2) shown below;

[Chemical Formula 17]

Average compositional formula (2)

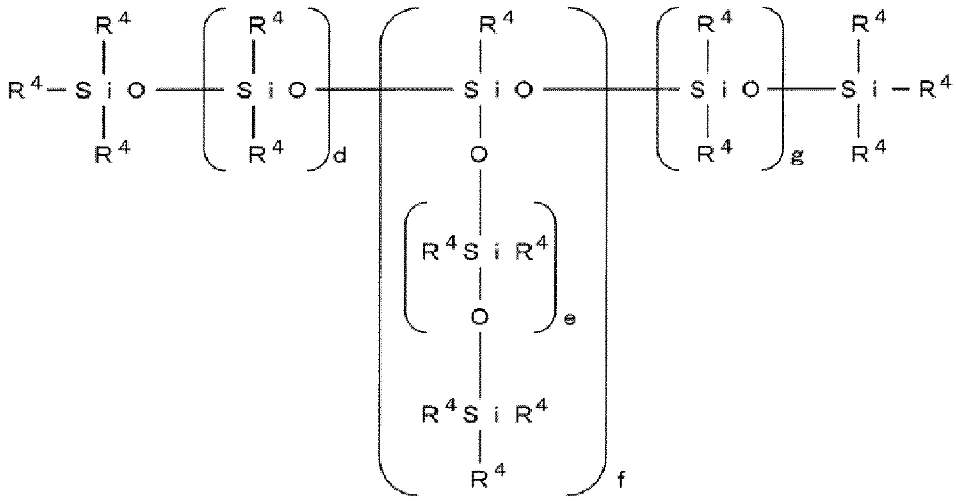

in the formula, $R^4$ represents a vinyl group or a methyl group, each $R^4$ may be the same or different, provided that, at least two $R^4$ at the both terminals of the main chain are vinyl groups; d, g and e each represents an integer of 0 or more; f represents an integer of 0 to 10, provided that f fulfills $0 \leq f \leq 10$; and each of d, e, f and g is an integer such that the viscosity of organopolysiloxane II becomes 30 to 10,000 mPa·s at 25°C:

Component (C): organopolysiloxane III which has viscosity of 30% by mass toluene-diluted solution of 1,500 to 2,000 mPa·s at 25°C, and has a vinyl group as an alkenyl group and has an alkenyl value of 0.01 to 0.10 mol/100g:

Component (D): organopolysiloxane IV which has viscosity of 30% by mass toluene-diluted solution of 1,500 to 2,000 mPa·s at 25°C, has a vinyl group as an alkenyl group, has a phenyl group as a aryl group, and has an alkenyl value of 0.0015 to 0.005 mol/100g, wherein the amount of aryl group relative to the total organic groups is 1.0 to 3.0 mol%:

Component (E): organohydrogenpolysiloxane V which is represented by average compositional formula (3) shown below, and has three hydrogen atoms bonded directly to silicon atoms in one molecule, and has viscosity of 10 to 500 mPa·s at 25°C;

Average compositional formula (3) $R^5_hH_iSiO_{(4-h-i)/2}$

in the formula, $R^5$ represents a methyl group and does not contain a aliphatic unsaturated bond; and h and i each represent an integer and fulfills $h+i \leq 3$.

The antistatic release agent of the present invention preferably includes: a silicone emulsion which contains components (A) to (E) shown below; at least one surfactant selected from the group consisting of polyoxyethylene lauryl ether and polyoxyethylene oleate; at least one thickener selected from the group consisting of methyl cellulose, carboxymethyl cellulose and polyvinyl alcohol; at least one catalytic activity inhibitor selected from the group consisting of ethynylcyclohexanol, 3-methyl-1-butyn-3-ol, 3-methyl-1-pentyn-3-ol, and 3,5-dimethyl-1-hexin-3-ol; at least one conductive improver selected from the group consisting of 2-hydroxyethylacrylamide, imidazole, trihydroxybenzoic acid, methyl gallate, diglycolic acid, thiodiacetic acid, dimethyl sulfoxide, ethylene glycol and polyethylene glycol; at least one platinum group metal-based catalyst selected from the group consisting of a platinum-vinyl siloxane complex and an emulsion of a platinum-vinyl siloxane complex; and a conductive complex of poly(3,4-ethylenedioxythiophene) and polystyrene sulfonate:

Component (A): organopolysiloxane I which has viscosity of 10 to 80 mPa·s at 25°C, has a vinyl value of 0.45 to 0.75 mol/100g, and is represented by the average compositional formula (1) shown below;

[Chemical Formula 18]

Average compositional formula (1)

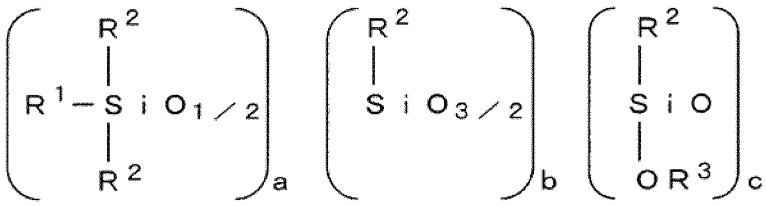

in the formula, $R^1$ represents a vinyl group; $R^2$ represents a methyl group; $R^3$ represents a methyl group; a and b each represents an integer; c represents an integer of 0 to 10, provided that, a, b and c fulfill (b+c)/a = 0.6 to 1.5, and $0 \leq c/(b+c) \leq 0.05$:

Component (B): organopolysiloxane II which has viscosity of 60 to 5,000 mPa·s at 25°C, has a vinyl value of 0.003 to 0.1 mol/100g, and is represented by the average compositional formula (2) shown below;

[Chemical Formula 19]

Average compositional formula (2)

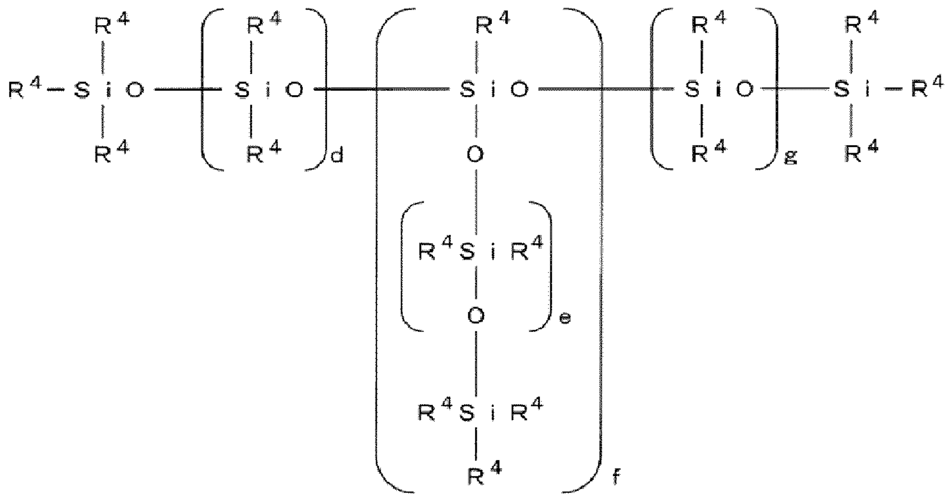

in the formula, $R^4$ represents a vinyl group or a methyl group, each $R^4$ may be the same or different, provided that, at least two $R^4$ at the both terminals of the main chain are vinyl groups; d, g and e each represents an integer of 0 or more; f represents an integer of 0 to 10, provided that f fulfills $0 \leq f \leq 10$; and each of d, e, f and g is an integer such that the viscosity of organopolysiloxane II becomes 30 to 10,000 mPa·s at 25°C:

Component (C): organopolysiloxane III which has viscosity of 30% by mass toluene-diluted solution of 1,500 to 2,000 mPa·s at 25°C, and has a vinyl group as an alkenyl group and has an alkenyl value of 0.01 to 0.10 mol/100g:

Component (D): organopolysiloxane IV which has viscosity of 30% by mass toluene-diluted solution of 1,500 to 2,000 mPa·s at 25°C, has a vinyl group as an alkenyl group, has a phenyl group as a aryl group, and has an alkenyl value of 0.0015 to 0.005 mol/100g, wherein the amount of aryl group relative to the total organic groups is 1.0 to 3.0 mol%:

Component (E): organohydrogenpolysiloxane V which is represented by average compositional formula (3) shown below, and has three hydrogen atoms bonded directly to silicon atoms in one molecule, and has viscosity of 10 to 500 mPa·s at 25°C;

Average compositional formula (3) $R^5_h H_i SiO_{(4-h-i)/2}$

in the formula, $R^5$ represents a methyl group and does not contain an aliphatic unsaturated bond; and h and i each represents an integer and fulfills $h+i \leq 3$.

The antistatic release agent of the present invention preferably includes: a silicone emulsion which contains components (A) to (E) shown below; at least one surfactant selected from the group consisting of polyoxyethylene lauryl ether and polyoxyethylene oleate; at least one thickener selected from the group consisting of methyl cellulose, carboxymethyl cellulose and polyvinyl alcohol; at least one catalytic activity inhibitor selected from the group consisting of ethynylcyclohexanol, 3-methyl-1-butyn-3-ol, 3-methyl-1-pentyn-3-ol, and 3,5-dimethyl-1-hexin-3-ol; at least one conductive improver selected from the group consisting of 2-hydroxyethylacrylamide, imidazole, trihydroxybenzoic acid, methyl gallate, diglycolic acid, thiodiacetic acid, dimethyl sulfoxide, ethylene glycol and polyethylene glycol; at least one platinum group metal-based catalyst selected from the group consisting of platinum-vinyl siloxane complex and an emulsion of a platinum-vinyl siloxane complex; water; and a conductive complex of poly(3,4-ethylenedioxythiophene) and polystyrene sulfonate:

Component (A): organopolysiloxane I which has viscosity of 10 to 80 mPa·s at 25°C, has a vinyl value of 0.45 to 0.75 mol/100g, and is represented by the average compositional formula (1) shown below;

[Chemical Formula 20]

Average compositional formula (1)

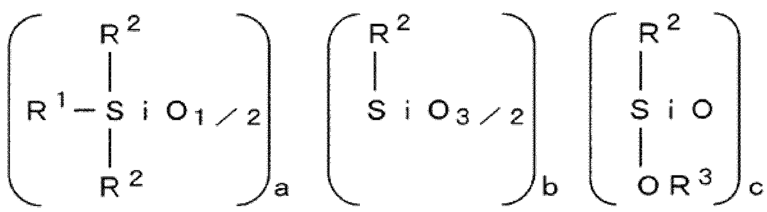

in the formula, $R^1$ represents a vinyl group; $R^2$ represents a methyl group; $R^3$ represents a methyl group; a and b each represents an integer; c represents an integer of 0 to 10, provided that, a, b and c fulfill $(b+c)/a = 0.6$ to 1.5, and $0 \leq c/(b+c) \leq 0.05$:

Component (B): organopolysiloxane II which has viscosity of 60 to 5,000 mPa·s at 25°C, has a vinyl value of 0.003 to 0.1 mol/100g, and is represented by the average compositional formula (2) shown below;

[Chemical Formula 21]

Average compositional formula (2)

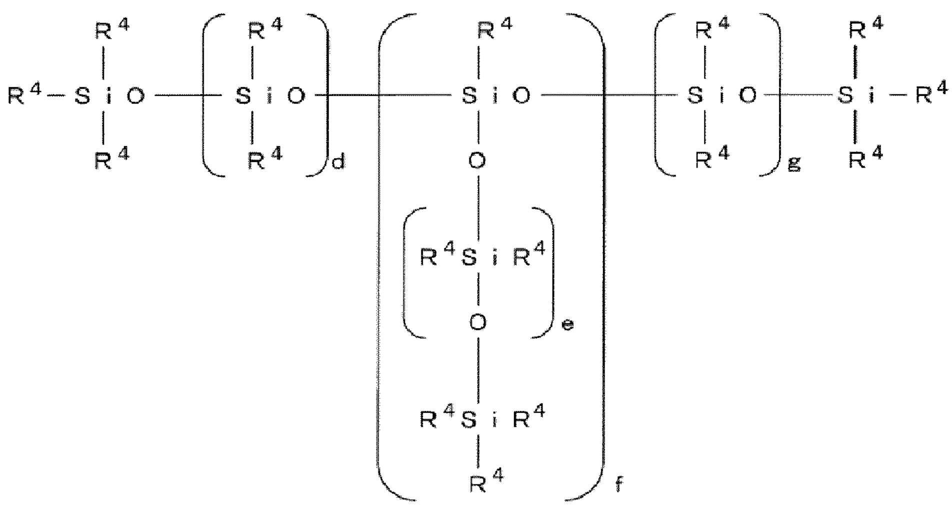

in the formula, $R^4$ represents a vinyl group or a methyl group, each $R^4$ may be the same or different, provided that, at least two $R^4$ at the both terminals of the main chain are vinyl groups; d, g and e each represents an integer of 0 or more; f represents an integer of 0 to 10, provided that f fulfills $0 \leq f \leq 10$; and each of d, e, f and g is an integer such that the viscosity of organopolysiloxane II becomes 30 to 10,000 mPa·s at 25°C:
Component (C): organopolysiloxane III which has viscosity of 30% by mass toluene-diluted solution of 1,500 to 2,000 mPa·s at 25°C, and has a vinyl group as an alkenyl group and has an alkenyl value of 0.01 to 0.10 mol/100g:
Component (D): organopolysiloxane IV which has viscosity of 30% by mass toluene-diluted solution of 1,500 to 2,000 mPa·s at 25°C, has a vinyl group as an alkenyl group, has a phenyl group as a aryl group, and has an alkenyl value of 0.0015 to 0.005 mol/100g, wherein the amount of aryl group relative to the total organic groups is 1.0 to 3.0 mol%:
Component (E): organohydrogenpolysiloxane V which is represented by average compositional formula (3) shown below, and has three hydrogen atoms bonded directly to silicon atoms in one molecule, and has viscosity of 10 to 500 mPa·s at 25°C;

Average compositional formula (3) $R^5_h H_i SiO_{(4-h-i)/2}$

in the formula, $R^5$ represents a methyl group and does not contain an aliphatic unsaturated bond; and h and i each represents an integer and fulfills $h+i \leq 3$.

The antistatic release agent of the present invention preferably includes: a silicone emulsion which contains components (A) to (E) shown below; and a conductive complex of poly(3,4-ethylenedioxythiophene) and polystyrene sulfonate:
Component (A): organopolysiloxane I which has viscosity of 30 mPa·s at 25°C, has a vinyl value of 0.60 mol/100g, and is represented by the average compositional formula shown below:
Component (B): dimethylpolysiloxane II which has viscosity of 400 mPa·s at 25°C, has a vinyl value of 0.02 mol/100g, has a linear structure and has vinyl groups at the both terminals of the main chain thereof:
Component (C): dimethylpolysiloxane III which has viscosity of 30% by mass toluene-diluted solution of 15,000 mPa·s at 25°C, has a vinyl group as an alkenyl group, has vinyl groups at the side chain and the both terminals of the main chain thereof, and has a vinyl value of 0.04 mol/100g:
Component (D): dimethylpolysiloxane IV which has viscosity of 30% by mass toluene-diluted solution of 15,000 mPa·s at 25°C, has a vinyl group as an alkenyl group at the side chain and the both terminals of the main chain thereof, has a phenyl group as an aryl group, and has a vinyl value of 0.002 mol/100g, wherein the amount of phenyl group relative to the total organic groups is 1.5 mol%:
Component (E): methylhydrogenpolysiloxane V.

[Chemical Formula 22]

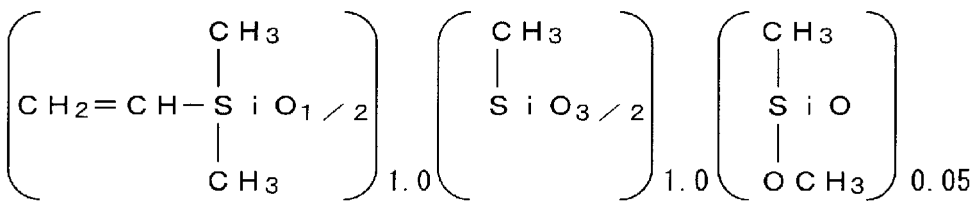

The antistatic release agent of the present invention preferably includes: a silicone emulsion which contains components (A) to (E) shown below; polyoxyethylene lauryl ether; and a conductive complex of poly(3,4-ethylenedioxythiophene) and polystyrene sulfonate:
Component (A): organopolysiloxane I which has viscosity of 30 mPa·s at 25°C, has a vinyl value of 0.60 mol/100g, and is represented by the average compositional formula shown below:
Component (B): dimethylpolysiloxane II which has viscosity of 400 mPa·s at 25°C, has a vinyl value of 0.02 mol/100g, has a linear structure and has vinyl groups at the both terminals of the main chain thereof:
Component (C): dimethylpolysiloxane III which has viscosity of 30% by mass toluene-diluted solution of 15,000 mPa·s at 25°C, has a vinyl group as an alkenyl group, has vinyl groups at the side chain and the both terminals of the main chain thereof, and has a vinyl value of 0.04 mol/100g:
Component (D): dimethylpolysiloxane IV which has viscosity of 30% by mass toluene-diluted solution of 15,000 mPa·s at 25°C, has vinyl groups as alkenyl groups at the side chain and the both terminals of the main chain thereof, has a phenyl group as an aryl group, and has a vinyl value of 0.002 mol/100g, wherein the amount of phenyl group relative to

the total organic groups is 1.5 mol%:
Component (E): methylhydrogenpolysiloxane V.

[Chemical Formula 23]

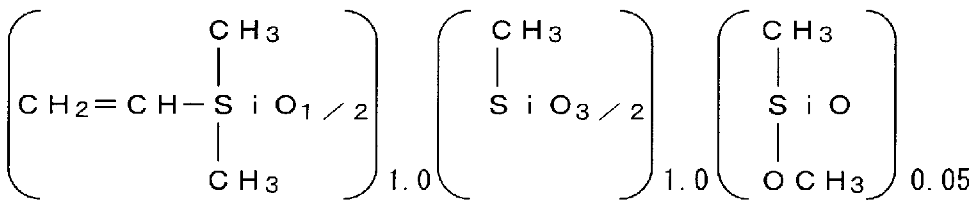

The antistatic release agent of the present invention preferably includes: a silicone emulsion which contains components (A) to (E) shown below; polyoxyethylene lauryl ether; 10% polyvinyl alcohol aqueous solution; and a conductive complex of poly(3,4-ethylenedioxythiophene) and polystyrene sulfonate:
Component (A): organopolysiloxane I which has viscosity of 30 mPa·s at 25°C, has a vinyl value of 0.60 mol/100g, and is represented by the average compositional formula shown below:
Component (B): dimethylpolysiloxane II which has viscosity of 400 mPa·s at 25°C, has a vinyl value of 0.02 mol/100g, has a linear structure and has vinyl groups at the both terminals of the main chain thereof:
Component (C): dimethylpolysiloxane III which has viscosity of 30% by mass toluene-diluted solution of 15,000 mPa·s at 25°C, has a vinyl group as an alkenyl group, has vinyl groups at the side chain and the both terminals of the main chain thereof, and has a vinyl value of 0.04 mol/100g:
Component (D): dimethylpolysiloxane IV which has viscosity of 30% by mass toluene-diluted solution of 15,000 mPa·s at 25°C, has vinyl groups as alkenyl groups at the side chain and the both terminals of the main chain thereof, has a phenyl group as an aryl group, and has a vinyl value of 0.002 mol/100g, wherein the amount of aryl group relative to the total organic groups is 1.5 mol%:
Component (E): methylhydrogenpolysiloxane V.

[Chemical Formula 24]

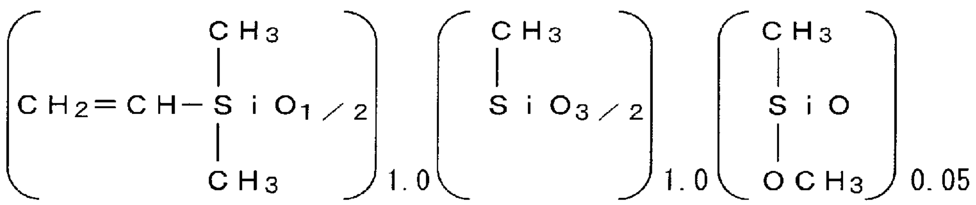

The antistatic release agent of the present invention preferably includes: a silicone emulsion which contains components (A) to (E) shown below; polyoxyethylene lauryl ether; 10% polyvinyl alcohol aqueous solution; ethynylcyclohexanol; and a conductive complex of poly(3,4-ethylenedioxythiophene) and polystyrene sulfonate:
Component (A): organopolysiloxane I which has viscosity of 30 mPa·s at 25°C, has a vinyl value of 0.60 mol/100g, and is represented by the average compositional formula shown below:
Component (B): organopolysiloxane II which has viscosity of 400 mPa·s at 25°C, has a vinyl value of 0.02 mol/100g, has a linear structure and has vinyl groups at the both terminals of the main chain thereof:
Component (C): organopolysiloxane III which has viscosity of 30% by mass toluene-diluted solution of 15,000 mPa·s at 25°C, has a vinyl group as an alkenyl group, has vinyl groups at the side chain and the both terminals of the main chain thereof, and has a vinyl value of 0.04 mol/100g:
Component (D): organopolysiloxane IV which has viscosity of 30% by mass toluene-diluted solution of 15,000 mPa·s at 25°C, has a vinyl group as an alkenyl group at the side chain and the both terminals of the main chain thereof, has a phenyl group as an aryl group, and has a vinyl value of 0.002 mol/100g, wherein the amount of phenyl group relative to the total organic groups is 1.5 mol%:
Component (E): methylhydrogenpolysiloxane V.

[Chemical Formula 25]

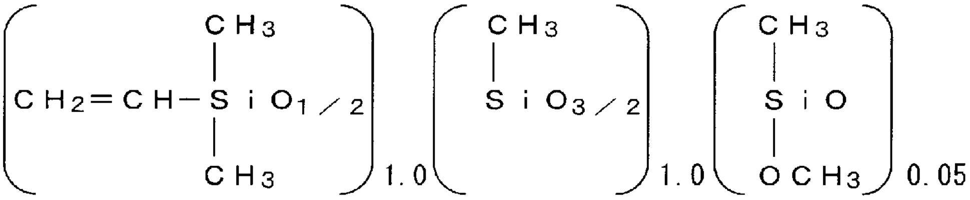

The antistatic release agent of the present invention preferably includes: a silicone emulsion which contains components (A) to (E) shown below; polyoxyethylene lauryl ether; 10% polyvinyl alcohol aqueous solution; ethynylcyclohexanol; at least one conductive improver selected from the group consisting of dimethyl sulfoxide, ethylene glycol, diglicolic acid, gallic acid, hydroxyethyl acrylate, polyethylene glycol and dipropylene glycol; and a conductive complex of poly(3,4-ethylenedioxythiophene) and polystyrene sulfonate:
Component (A): organopolysiloxane I which has viscosity of 30 mPa·s at 25°C, has a vinyl value of 0.60 mol/100g, and is represented by the average compositional formula shown below:
Component (B): dimethylpolysiloxane II which has viscosity of 400 mPa·s at 25°C, has a vinyl value of 0.02 mol/100g, has a linear structure and has vinyl groups at the both terminals of the main chain thereof:
Component (C): dimethylpolysiloxane III which has viscosity of 30% by mass toluene-diluted solution of 15,000 mPa·s at 25°C, has a vinyl group as an alkenyl group, has vinyl groups at the side chain and the both terminals of the main chain thereof, and has a vinyl value of 0.04 mol/100g:
Component (D): dimethylpolysiloxane IV which has viscosity of 30% by mass toluene-diluted solution of 15,000 mPa·s at 25°C, has vinyl groups as alkenyl groups at the side chain and the both terminals of the main chain thereof, has a phenyl group as an aryl group, and has a vinyl value of 0.002 mol/100g, wherein the amount of aryl group relative to the total organic groups is 1.5 mol%:
Component (E): methylhydrogenpolysiloxane V:

[Chemical Formula 26]

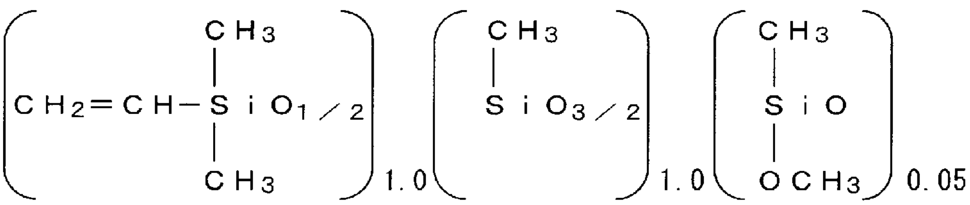

The antistatic release agent of the present invention preferably includes: a silicone emulsion which contains components (A) to (E) shown below; polyoxyethylene lauryl ether; 10% polyvinyl alcohol aqueous solution; ethynylcyclohexanol; at least one conductive improver selected from the group consisting of dimethyl sulfoxide, ethylene glycol, diglycolic acid gallic acid, hydroxyethyl acrylate, polyethylene glycol and dipropylene glycol; an emulsion of a platinum-vinyl siloxane complex; and a conductive complex of poly(3,4-ethylenedioxythiophene) and polystyrene sulfonate:
Component (A): organopolysiloxane I which has viscosity of 30 mPa·s at 25°C, has a vinyl value of 0.60 mol/100g, and is represented by the average compositional formula shown below:
Component (B): organopolysiloxane II which has viscosity of 400 mPa·s at 25°C, has a vinyl value of 0.02 mol/100g, has a linear structure and has vinyl groups at the both terminals of the main chain thereof:
Component (C): organopolysiloxane III which has viscosity of 30% by mass toluene-diluted solution of 15,000 mPa·s at 25°C, has a vinyl group as an alkenyl group, has vinyl groups at the side chain and the both terminals of the main chain thereof, and has a vinyl value of 0.04 mol/100g:
Component (D): organopolysiloxane IV which has viscosity of 30% by mass toluene-diluted solution of 15,000 mPa·s at 25°C, has a vinyl group as an alkenyl group at the side chain and the both terminals of the main chain thereof, has a phenyl group as an aryl group, and has a vinyl value of 0.002 mol/100g, wherein the amount of phenyl group relative to the total organic groups is 1.5 mol%:

Component (E): methylhydrogenpolysiloxane V.

[Chemical Formula 27]

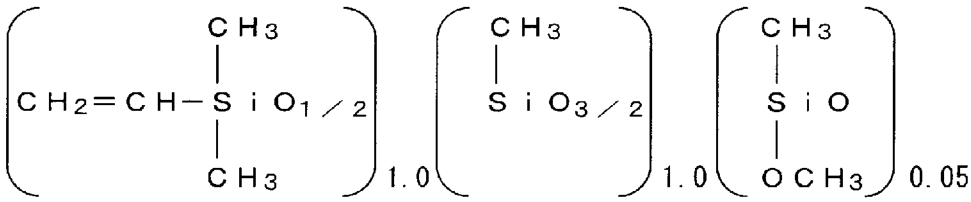

The antistatic release agent of the present invention preferably includes: a silicone emulsion which contains components (A) to (E) shown below; polyoxyethylene lauryl ether; 10% polyvinyl alcohol aqueous solution; ethynylcyclohexanol; at least one conductive improver selected from the group consisting of dimethyl sulfoxide, ethylene glycol, diglycolic acid, gallic acid, hydroxyethyl acrylate, polyethylene glycol and dipropylene glycol; an emulsion of a platinum-vinyl siloxane complex; water, and a conductive complex of poly(3,4-ethylenedioxythiophene) and polystyrene sulfonate:
Component (A): dimethylpolysiloxane I which has viscosity of 30 mPa·s at 25°C, has a vinyl value of 0.60 mol/100g, and is represented by the average compositional formula shown below:
Component (B): dimethylpolysiloxane II which has viscosity of 400 mPa·s at 25°C, has a vinyl value of 0.02 mol/100g, has a linear structure and has vinyl groups at the both terminals of the main chain thereof:
Component (C): dimethylpolysiloxane III which has viscosity of 30% by mass toluene-diluted solution of 15,000 mPa·s at 25°C, has a vinyl group as an alkenyl group, has vinyl groups at the side chain and the both terminals of the main chain thereof, and has a vinyl value of 0.04 mol/100g.
Component (D): dimethylpolysiloxane IV which has viscosity of 30% by mass toluene-diluted solution of 15,000 mPa·s at 25°C, has a vinyl group as an alkenyl group at the side chain and the both terminals of the main chain thereof, has a phenyl group as an aryl group, and has a vinyl value of 0.002 mol/100g, wherein the amount of aryl group relative to the total organic groups is 1.5 mol%:
Component (E): methylhydrogenpolysiloxane V.

[Chemical Formula 28]

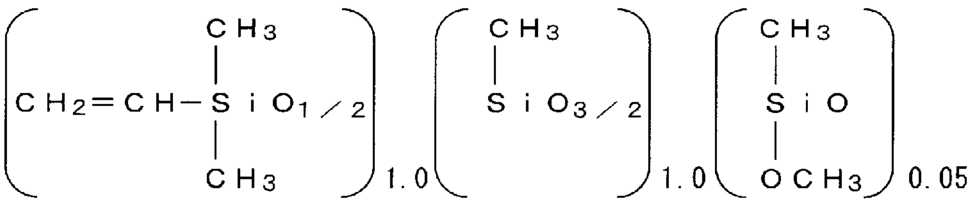

(Method of producing antistatic release agent)

A production example for producing the antistatic release agent will be explained.

In this production example, components (A) to (E), water and if necessary, a surfactant are stirred and mixed to prepare a silicone emulsion. In this step, the components and water may be mixed using a high shear stirrer such as a planetary mixer or a combination mixer, and then emulsified in accordance with phase inversion method, followed by adding water, thereby preparing a silicone emulsion.

Separately, in a polyanion aqueous solution, monomers for constituting a $\pi$-conjugated electrically conductive polymer are subjected to oxidative polymerization to obtain aqueous dispersion containing a conductive complex of the $\pi$-conjugated electrically conductive polymer and the polyanion.

Next, the silicone emulsion, the aqueous dispersion containing a conductive complex of the $\pi$-conjugated electrically conductive polymer and the polyanion, water and if necessary, a platinum group metal-based catalyst and an optional component are stirred and mixed to obtain an antistatic release agent. It is preferable that the platinum group metal-based catalyst keeps in a water-dispersible state in advance. For example, emulsion state is preferable.

The production method of the antistatic release agent is not limited to the aforementioned production method.

<Antistatic release film>

An antistatic release film of the second aspect of the present invention includes a plastic film, a release agent layer formed on at least one surface of the plastic film.

The release agent layer in the antistatic release film of the present invention is a layer formed from the antistatic release agent.

The thickness of the antistatic release film is preferably 2 to 500 μm, and more preferably 10 to 100 μm. In other embodiment, the thickness is preferably 10 μm to 1 mm, and more preferably 10 to 300 μm. Here, the "thickness of the antistatic release film" is the sum of the thickness of a substrate and a release agent layer, and can be determined in accordance with a conventional method such as JIS K7130, JIS K6783, JIS C2151, and JIS Z1702.

The thickness of the release layer in the antistatic release film is preferably 10 nm to 1 μm, and more preferably 10 nm to 300 nm. Here, the "thickness of the release layer" is the thickness of the layer formed from the antistatic release agent. The thickness can be measured using Scanning Electron Microscope (SEM), Transmission Electron Microscope (TEM), analysis by simulation and actual measurement using X-ray and various wave length, and stylus based measurement which is a direct measurement method using a probe.

As a plastic film, polyolefin films such as a polybiaxially-drawn polypropylene film, a polyethylene film, and an ethylene-propylene copolymer film; and polyester films such as a polyethylene terephthalate film can be used.

The thickness of the plastic film is not particularly limited, but in general, is within the range from 5 to 100 μm.

As a production method of the antistatic release film, a method includes: applying an antistatic release agent to at least one surface of a plastic film; and drying the antistatic release agent to obtain an antistatic release film can be mentioned.

As the method of applying the antistatic releasing agent, a method using a coating machine such as a bar coater, a gravure coater, an air knife coater, a roll coater, and a wire bar can be employed. The coating amount is not particularly limited, but in general, the solid content is preferably 0.1 to 2.0 g/m2.

As the method of drying the antistatic release agent, a method of heating at 80 to 160°C for 5 seconds to 3 minutes using a circulating hot air dryer, and a method of irradiating infrared ray can be mentioned. When the antistatic release agent has ultraviolet curable properties, the antistatic release agent can be cured by irradiation of ultraviolet.

The release agent layer in the antistatic release film of the present invention is a layer formed from the antistatic release agent, and has excellent adhesion properties and antistatic properties relative to a plastic film and is a layer having easy releasing properties.

The method of use of the antistatic release film as an adhesive sheet includes allowing the antistatic release film to adhere to optical or electronic and electrical parts.

[EXAMPLES]

Although the following indicates examples and comparative examples of the present invention, the present invention is not limited to the following examples. In the following examples, "parts" means "parts by mass", and "%" means "% by mass".

The viscosity is a value determined using a rotating viscometer at 25°C.

(Production Example 1)

The following components (A) to (H) were fed into a 5L complex emulsification device (product name; TK Combi mix M-type, manufactured by Kika Kogyo Co., Ltd.) equipped with an anchor-shaped stirring device capable of stirring the entire vessel and a rotatable disc in which small projections of tooth form are alternately-arranged up and down on the periphery of the disc, and then stirred and mixed, thereby obtaining a mixture.

Next, 15 parts by mass of water was added to the obtained mixture to inverse the phase, and stirred for 30 minutes to obtain an emulsion. The obtained emulsion was fed into a 15L tank equipped with a stirrer, and 38.7 parts by mass of dilution water was added thereto, and stirred and mixed, thereby obtaining O/W type silicone emulsion 1 containing 40% silicone. The molar ratio of the total amount of SiH groups to the alkenyl groups (mole number of SiH group / mole number of alkenyl group) in the silicone emulsion 1 was 1.8.

- (A) organopolysiloxane I: organopolysiloxane which has viscosity of 30 mPa·s at 25°C, is represented by the average compositional formula shown below, and has a vinyl value of 0.60 mol/100 g: 20 parts
- (B) organopolysiloxane II: dimethylpolysiloxane which has viscosity of 400 mPa·s at 25°C, has a vinyl value of 0.02 mol/100 g, has a linear structure, and has vinyl groups at the both terminals of the main chain thereof: 55 parts
- (C) organopolysiloxane III: dimethylpolysiloxane which has viscosity of 30% by mass toluene-diluted solution of 15,000 mPa·s at 25°C, and has a vinyl group as an alkenyl group, has vinyl groups at the both terminals of the main

chain thereof, and has a vinyl value of 0.04 mol/100 g: 5 parts

- (D) organopolysiloxane IV: dimethylpolysiloxane having a vinyl group and a phenyl group, which has viscosity of 30% by mass toluene-diluted solution of 15,000 mPa·s at 25°C, has vinyl groups as an alkenyl groups at the side chain and the both terminals of the main chain thereof, and has a vinyl value of 0.002 mol/100g, and has a phenyl group as an aryl group, wherein the amount of phenyl group relative to the total organic groups is 1.5 mol%: 20 parts
- (E) organohydrogenpolysiloxane V: methylhydrogenpolysiloxane which has viscosity of 20 mPa·s at 25°C: 15 parts
- (F) surfactant: polyoxyethylene lauryl ether (HLB: 13.6): 2.3 parts
- (G) thickener: 10% of polyvinyl alcohol aqueous solution: 11.5 parts
- (H) catalytic activity inhibitor: ethynylcyclohexanol: 0.5 parts

The amount of each component is shown in table 1.

[Chemical Formula 29]

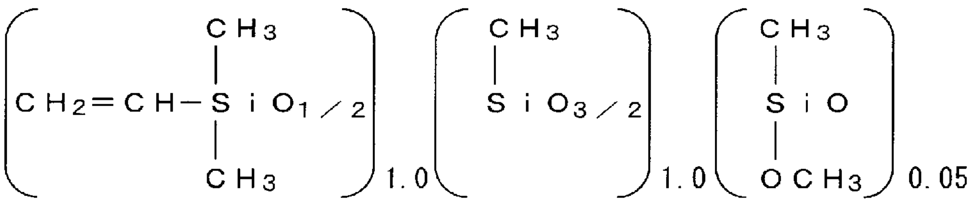

(Production Example 2)

Silicone emulsion 2 was obtained in the same manner as in Production Example 1, except that 35 parts of organopolysiloxane I, 35 parts of organopolysiloxane II, 10 parts of organopolysiloxane III, 20 parts of organohydrogenpolysiloxane V, 2.5 parts of the surfactant, and 52.5 parts of dilution water were used. The molar ratio of the total amount of SiH groups to the alkenyl groups (mole number of SiH group / mole number of alkenyl group) in the silicone emulsion 2 was 1.5.

(Production Example 3)

Silicone emulsion 3 was obtained in the same manner as in Production Example 1, except that 50 parts of organopolysiloxane I, 35 parts of organopolysiloxane II, 5 parts of organopolysiloxane III, 10 parts of organopolysiloxane IV, 35 parts of organohydrogenpolysiloxane V, 2.7 parts of the surfactant, and 66.3 parts of dilution water were used. The molar ratio of the total amount of SiH groups to the alkenyl groups (mole number of SiH group / mole number of alkenyl group) in the silicone emulsion 3 was 1.8.

(Production Example 4)

Silicone emulsion 4 was obtained in the same manner as in Production Example 1, except that 65 parts of organopolysiloxane II, 10 parts of organopolysiloxane III, 5 parts of organopolysiloxane IV, and 35.7 parts of dilution water were used. The molar ratio of the total amount of SiH groups to the alkenyl groups (mole number of SiH group / mole number of alkenyl group) in the silicone emulsion 4 was 1.8.

(Production Example 5)

Silicone emulsion 5 was obtained in the same manner as in Production Example 1, except that 50 parts of organopolysiloxane I, 50 parts of organopolysiloxane II, 35 parts of organohydrogenpolysiloxane V, 2.7 parts of the surfactant, and 64.3 parts of dilution water were used, and organopolysiloxane III and organopolysiloxane IV were not incorporated. The molar ratio of the total amount of SiH groups to the alkenyl groups (mole number of SiH group / mole number of alkenyl group) in the silicone emulsion 5 was 1.8.

(Production Example 6)

Silicone emulsion 6 was obtained in the same manner as in Production Example 1, except that 60 parts of organopolysiloxane II, and 33.7 parts of dilution water were used and organopolysiloxane III was not used. The molar

ratio of the total amount of SiH groups to the alkenyl groups (mole number of SiH group / mole number of alkenyl group) in the silicone emulsion 6 was 1.8.

[Table 1]

| | | Production Examples | | | | | |
|---|---|---|---|---|---|---|---|
| | | 1 | 2 | 3 | 4 | 5 | 6 |
| (A): Organopolysiloxane I | parts | 20 | 35 | 50 | 20 | 50 | 20 |
| (B): Organopolysiloxane II | parts | 55 | 35 | 35 | 65 | 50 | 60 |
| (C): Organopolysiloxane III | parts | 5 | 10 | 5 | 10 | 0 | 0 |
| (D): Organopolysiloxane IV | parts | 20 | 20 | 10 | 5 | 0 | 20 |
| Total amount of components (A) to (D) | parts | 100 | 100 | 100 | 100 | 100 | 100 |
| (E): Methylhydrogenpolysiloxane V | parts | 15 | 25 | 35 | 15 | 35 | 15 |
| (F): Surfactant | parts | 2.3 | 2.5 | 2.7 | 2.3 | 2.7 | 2.3 |
| (G): Thickner | parts | 11.5 | 11.5 | 11.5 | 11.5 | 11.5 | 11.5 |
| (H): Catalytic activity inhibitor | parts | 0.5 | 0.5 | 0.5 | 0.5 | 0.5 | 0.5 |
| Water to dilute thickner | parts | 103.5 | 103.5 | 103.5 | 103.5 | 103.5 | 103.5 |
| Water for phase inversion | parts | 15 | 15 | 15 | 15 | 15 | 15 |
| Dilution water | parts | 38.7 | 52.5 | 66.3 | 35.7 | 64.3 | 33.7 |
| Total amount of water | parts | 157.2 | 171 | 184.8 | 154.2 | 182.8 | 152.2 |
| Total | | 287.5 | 312.5 | 337.5 | 287.5 | 337.5 | 287.5 |
| Solid content of silicones ((A)+(B)+ (C)+(D)+(E)) | % | 40 | 40 | 40 | 40 | 40 | 40 |
| Amount of component (A) relative to 100 parts by mass of the total amount of components (A) to (D) | parts | 20 | 35 | 50 | 20 | 50 | 20 |
| Amount of component (D) relative to 100 parts by mass of the total amount of components (C) to (D) | % | 80 | 67 | 67 | 33 | - | - |
| Ratio of total amount of SiH groups in component (E) relative to the total amount of alkenyl groups in components (A) to (D) | - | 1.8 | 1.8 | 1.8 | 1.8 | 1.8 | 1.8 |
| Amount of surfactants relative to 100 parts by mass of the total amount of components (A) to (E) | parts | 2.0 | 2.0 | 2.0 | 2.0 | 2.0 | 2.0 |
| Amount of water relative to 100 parts by mass of the total amount of components (A) to (E) | parts | 136.7 | 136.8 | 136.9 | 134.1 | 135.4 | 132.3 |

(Production Example 7)

206 g of sodium styrene sulfonate were dissolved in 1000 ml of ion exchange water followed by adding thereto, a solution of 1.14 g of ammonium persulfate preliminarily dissolved in 10 ml of water in a dropwise manner over 20 minutes while stirring at 80°C, and further stirring the solution for 12 hours.

1000 ml of sulfuric acid diluted to 10% by mass was added to the resulting sodium styrene sulfonate-containing solution. Subsequently, about 1,000 ml of polystyrene sulfonate-containing solution were removed using ultrafiltration. Moreover, 2,000 ml of ion exchange water were added to the residual liquid, and about 2,000 ml of solution were removed using ultrafiltration. The aforementioned ultrafiltration procedure was repeated three times. Subsequently, 2,000 mL of ion exchange water were added to the obtained filtrate, and about 2,000 mL of solution were removed using ultrafiltration. The aforementioned ultrafiltration procedure was repeated three times and the water in the resulting solution was removed under reduced pressure to obtain polystyrene sulfonate in the form of a colorless solid. The mass average molecular weight of this polystyrene sulfonate was about 300,000.

(Production Example 8)

14.2 g of 3,4-ethylenedioxythiophene and a solution obtained by dissolving 36.7 g of the polystyrene sulfonate obtained in Production Example 7 in 2,000 ml of ion exchange water were mixed at 20°C.
While holding at 20°C, 29.64 g of ammonium persulfate dissolved in 200 mL of ion exchange water and an oxidation catalyst solution obtained by dissolving 8.0 g of ferric sulfate were slowly added to the resulting mixed solution while stirring. The reaction was allowed to proceed for 3 hours. Subsequently, 2,000 mL of ion exchange water were added to the reaction liquid, and about 2,000 mL of the solution were removed using ultrafiltration. This procedure was repeated three times.
Next, 200 ml of dilute sulfuric acid having a concentration of 10% by mass and 2,000 ml of ion exchange water were added to the treated liquid on which the aforementioned ultrafiltration was carried out, and about 2,000 ml of the treated liquid were removed using ultrafiltration. Subsequently, 2,000 ml of ion exchange water were further added to the solution, and about 2000 ml of liquid were removed using ultrafiltration. This procedure was repeated three times.
Moreover, 2,000 ml of ion exchange water were added to the resulting treated liquid and about 2,000 ml of the treated liquid were removed using ultrafiltration. This procedure was repeated five times to obtain an aqueous dispersion of about 1.2% by mass of polystyrene sulfonate-doped poly(3,4-ethylenedioxythiophene) (hereinafter, referred to as "PEDOT-PSS aqueous dispersion").

(Example 1)

200 parts of the PEDOT-PSS aqueous dispersion and 5 parts of emulsion of a platinum-vinyl siloxane complex were added to 100 parts of the silicone emulsion 1, and mixed sufficiently. Then, ion exchange water was added the mixture such that the solid content was adjusted to 3%, thereby obtaining a release agent.

(Example 2)

A release agent was obtained in the same manner as in Example 1, except that silicone emulsion 2 was used instead of silicone emulsion 1.

(Example 3)

A release agent was obtained in the same manner as in Example 1, except that 100 part of PEDOT-PSS aqueous dispersion was used.

(Example 4)

A release agent was obtained in the same manner as in Example 1, except that 50 part of PEDOT-PSS aqueous dispersion was used.

(Example 5)

A release agent was obtained in the same manner as in Example 1, except that 500 part of PEDOT-PSS aqueous dispersion was used.

(Example 6)

A release agent was obtained in the same manner as in Example 1, except that 1,000 part of PEDOT-PSS aqueous dispersion was used.

(Example 7)

A release agent was obtained in the same manner as in Example 1, except that 2,000 part of PEDOT-PSS aqueous dispersion was used.

(Example 8)

A release agent was obtained in the same manner as in Example 1, except that 20 parts of dimethyl sulfoxide (in tables, referred to as "DMSO") was further incorporated in addition to the PEDOT-PSS aqueous dispersion and the

emulsion of platinum-based catalyst.

(Example 9)

A release agent was obtained in the same manner as in Example 8, except that 100 part of PEDOT-PSS aqueous dispersion and 4 part of dimethyl sulfoxide were used.

(Example 10)

A release agent was obtained in the same manner as in Example 9, except that 12 part of dimethyl sulfoxide was used.

(Example 11)

A release agent was obtained in the same manner as in Example 9, except that 20 part of dimethyl sulfoxide was used.

(Example 12)

A release agent was obtained in the same manner as in Example 9, except that 40 part of dimethyl sulfoxide was used.

(Example 13)

A release agent was obtained in the same manner as in Example 1, except that 100 part of the PEDOT-PSS aqueous dispersion was used, and 12 parts of ethylene glycol (in tables, referred to as "EG") was further used in addition to the PEDOT-PSS aqueous dispersion and the emulsion of platinum-base catalyst.

(Example 14)

A release agent was obtained in the same manner as in Example 13, except that 20 part of ethylene glycol was used.

(Example 15)

A release agent was obtained in the same manner as in Example 13, except that 40 part of ethylene glycol was used.

(Example 16)

A release agent was obtained in the same manner as in Example 1, except that 100 part of the PEDOT-PSS aqueous dispersion was used, and 12 parts of diglycolic acid (in tables, referred to as "DGA") was further incorporated in addition to the PEDOT-PSS aqueous dispersion and the emulsion of platinum-based catalyst.

(Example 17)

A release agent was obtained in the same manner as in Example 16, except that 20 part of diglycolic acid was used.

(Example 18)

A release agent was obtained in the same manner as in Example 16, except that 40 part of diglycolic acid was used.

(Example 19)

A release agent was obtained in the same manner as in Example 1, except that 100 part of the PEDOT-PSS aqueous dispersion was used, and 20 parts of gallic acid (in tables, referred to as "GA") was further incorporated in

addition to the PEDOT-PSS aqueous dispersion and the emulsion of platinum-based catalyst.

(Example 20)

A release agent was obtained in the same manner as in Example 1, except that 100 part of the PEDOT-PSS aqueous dispersion was used, and 20 parts of hydroxyethyl acrylate (in tables, referred to as "HEA") was further incorporated in addition to the PEDOT-PSS aqueous dispersion and the emulsion of platinum-based catalyst.

(Example 21)

A release agent was obtained in the same manner as in Example 1, except that 100 part of the PEDOT-PSS aqueous dispersion was used, and 20 parts of polyethylene glycol (mass average molecular weight: 600, in tables, referred to as "PEG") was further incorporated in addition to the PEDOT-PSS aqueous dispersion and the emulsion of platinum-based catalyst.

(Example 22)

A release agent was obtained in the same manner as in Example 1, except that 100 part of the PEDOT-PSS aqueous dispersion was used, and 20 parts of dipropylene glycol (in tables, referred to as "DPG") was further incorporated in addition to the PEDOT-PSS aqueous dispersion and the emulsion of platinum-based catalyst.

(Comparative Example 1)

A release agent was obtained in the same manner as in Example 1, except that 10 part of PEDOT-PSS aqueous dispersion was used.

(Comparative Example 2)

A release agent was obtained in the same manner as in Example 1, except that 4,000 part of PEDOT-PSS aqueous dispersion was used.

(Comparative Example 3)

A release agent was obtained in the same manner as in Example 1, except that the silicone emulsion 3 was used instead of the silicone emulsion 1.

(Comparative Example 4)

A release agent was obtained in the same manner as in Example 1, except that the silicone emulsion 4 was used instead of the silicone emulsion 1.

(Comparative Example 5)

A release agent was obtained in the same manner as in Example 1, except that the silicone emulsion 5 was used instead of the silicone emulsion 1.

(Comparative Example 6)

A release agent was obtained in the same manner as in Example 1, except that the silicone emulsion 6 was used instead of the silicone emulsion 1.

<Evaluations>

With respect to release agents obtained examples, curing time, adhesion properties, force required to peel a film (hereinafter, referred to as "peel strength"), residual adhesion ratio, and surface resistivity were evaluated or measured by the following method. The results are shown in Tables 2 to 5.

(Curing time)

The obtained release agent was applied to a PET film having a thickness of 38 μm using a barcoater (No. 4) so that the applied amount after drying became 0.3g/$m^2$, and then heated at 120°C in a hot air drier to form a release agent layer. The release agent layer was rubbed with a finger 10 times. At the time when the presence of cloud and rub off were not visually observed, it was taken as completion of curing. The time between completion of heating and completion of curing was measured and the time was taken as curing time.

[Adhesion properties (Anchorage properties)]

The obtained release agent was applied to a PET film having a thickness of 38 μm using a barcoater (No. 4) so that the applied amount after drying became 0.3g/m2, and heated at 120°C for 1 minute in a hot air drier and left at room temperature for one day to form a release agent layer, thereby obtaining a release film. The release agent layer was rubbed with a finger, and the existence or non-existence of cloud or rub off was visually observed, and initial adhesion properties were evaluated in accordance with the following criteria.
The obtained release film was left in a thermostatic bath at 50°C for 14 days. Thereafter, the release film was rubbed with a finger 10 times, and the existence or non-existence of cloud or rub off was visually observed, and adhesion properties with time were evaluated in accordance with following criteria.

A: cloud and rub off were not observed and excellent adhesion properties could be obtained.
B: cloud and rub off were slightly observed, but adhesion properties could be obtained in a problem-free level for practical use.
C: cloud and rub off were observed and adhesion properties were low.

[Peel strength]

A release agent layer was formed in the same manner as in the evaluation of curable property, and a polyester-based adhesion tape (product name: nitto-31B, manufactured by Nitto Denko Corporation) was laminated on the surface of the release agent layer, and a load of 1976 Pa was applied to the adhesion tape to adhere the polyester adhesion tape to the release agent layer. Using a tensile testing machine, the polyester adhesion tape was peeled from the release agent layer while keeping the angle between the polyester adhesion tape and the release agent at 180° (peeling speed: 0.3 m/min), and then, peel strength was measured. As the peel strength is smaller, the adhesion sheet is easily peeled after the adhesion sheet is adhered to the release agent layer. That is, the adhesive sheet is a film having releasing properties.

[Residual adhesion ratio (Subsequent adhesion ratio)]

A polyester adhesion tape was laminated on the release agent layer in the same manner as in the measurement of [Peel strength]. Then, the laminated structure was subjected to heating treatment at 85°C for 20 hours, and, the polyester adhesion tape was peeled from the release agent layer and then, the polyester adhesion tape was adhered to a stainless panel. Thereafter, using a tensile testing machine, the polyester adhesion tape was peeled from the stainless panel and then, peel strength X was measured.
A polyester adhesion tape that had not been adhered to a release agent layer was adhered to a stainless board, and using a tensile testing machine, the polyester adhesion tape was peeled from the stainless board and then, peel strength Y was measured.
In accordance with the formula: (peel strength X / peel strength Y) × 100 (%), residual adhesion ratio was calculated.
As the residual adhesion ratio is larger, release properties of the release agent layer become excellent, and deterioration of adhesion properties of polyester adhesion sheet after adhesion to the release agent layer can be suppressed.

[Surface resistivity]

Using Hiresta MCP-HT450 manufactured by Mitsubishi Chemical Corporation and probe MCP-HTP12, surface resistivity was measured under applied voltage of 10V. The result "OVER" in Tables means that surface resistivity was too high to measure it. It should be noted that, with respect to Comparative Examples 3 to 6, surface resistivity was not measured. In the tables, the expression "Ω/□" means "Ω/sq.".

[Table 2]

| | | Examples | | | | | | |
|---|---|---|---|---|---|---|---|---|
| | | 1 | 2 | 3 | 4 | 5 | 6 | 7 |
| Type of silicone emulsion | | 1 | 2 | 1 | 1 | 1 | 1 | 1 |
| Silicone emulsion | parts | 100 | 100 | 100 | 100 | 100 | 100 | 100 |
| Components (A) to (E) | parts | 40 | 40 | 40 | 40 | 40 | 40 | 40 |
| PEDOT-PSS dispersion | parts | 200 | 200 | 100 | 50 | 500 | 1000 | 2000 |
| Solid content of PEDOT-PSS | parts | 2.4 | 2.4 | 1.2 | 0.6 | 6 | 12 | 24 |
| CAT-PM-10A | parts | 5 | 5 | 5 | 5 | 5 | 5 | 5 |
| Amount of conductive complex relative to 100 parts by mass of the total amount of components (A) to (E) (parts) | parts | 6.0 | 6.0 | 3.0 | 1.5 | 15.0 | 30.0 | 60.0 |
| Curing time (second) | | 30 | 30 | 90 | 90 | 60 | 30 | 30 |
| Initial adhesion properties | | A | B | B | A | A | A | A |
| Adhesion properties with time | | A | A | A | A | A | A | A |
| Peel strength (N/2.5cm) | | 0.05 | 0.10 | 0.05 | 0.05 | 0.05 | 0.05 | 0.05 |
| Residual adhesion ratio | | 90.5 | 97.0 | 88.8 | 88.3 | 90.5 | 91.0 | 91.5 |
| Surface resistivity(Ω/□) | | $910\times10^9$ | $8.30\times10^9$ | $6.40\times10^{10}$ | $4.50\times10^{11}$ | $2.19\times10^8$ | $5.12\times10^7$ | $1.04\times10^7$ |

[Table 3]

| | | Examples | | | | | | | |
|---|---|---|---|---|---|---|---|---|---|
| | | 8 | 9 | 10 | 11 | 12 | 13 | 14 | 15 |
| Type of silicone emulsion | | 1 | 1 | 1 | 1 | 1 | 1 | 1 | 1 |
| Silicone emulsion | parts | 100 | 100 | 100 | 100 | 100 | 100 | 100 | 100 |
| Components (A) to (E) | parts | 40 | 40 | 40 | 40 | 40 | 40 | 40 | 40 |
| PEDOT-PSS dispersion | parts | 200 | 100 | 100 | 100 | 100 | 100 | 100 | 100 |
| Solid content of PEDOT-PSS | parts | 2.4 | 1.2 | 1.2 | 1.2 | 1.2 | 1.2 | 1.2 | 1.2 |
| CAT-PM-10A | parts | 5 | 5 | 5 | 5 | 5 | 5 | 5 | 5 |
| Amount of conductive complex relative to 100 parts by mass of the total amount of components (A) to (E) (parts) | parts | 6.0 | 3.0 | 3.0 | 3.0 | 3.0 | 3.0 | 3.0 | 3.0 |
| Type of conductive improver | | DMSO | | | | | EG | | |
| Amount of conductive improver (parts) | parts | 20 | 4 | 12 | 20 | 40 | 12 | 20 | 40 |
| Amount of conductive improver relative to 100 parts by mass of the total amount of components (A) to (E) (parts) | parts | 50 | 10 | 30 | 50 | 100 | 30 | 50 | 100 |
| Curing time (second) | | 30 | 90 | 90 | 90 | 90 | 90 | 90 | 90 |
| Initial adhesion properties | | B | B | B | B | B | B | B | B |
| Adhesion properties with time | | A | A | A | A | A | A | A | A |
| Peel strength (N/2.5cm) | | 0.05 | 0.04 | 0.05 | 0.04 | 0.04 | 0.04 | 0.04 | 0.05 |
| Residual adhesion ratio | | 89.9 | 95.8 | 98.4 | 94.7 | 99.5 | 99.5 | 96.8 | 97.9 |
| Surface resistivity(Ω/□) | | $7.80 \times 10^6$ | $4.70 \times 10^{10}$ | $1.20 \times 10^{10}$ | $7.40 \times 10^7$ | $7.40 \times 10^7$ | $5.60 \times 10^9$ | $5.30 \times 10^7$ | $4.50 \times 10^7$ |

[Table 4]

| | | Examples | | | | | | |
|---|---|---|---|---|---|---|---|---|
| | | 16 | 17 | 18 | 19 | 20 | 21 | 22 |
| Type of silicone emulsion | | 1 | 2 | 1 | 1 | 1 | 1 | 1 |
| Silicone emulsion | parts | 100 | 100 | 100 | 100 | 100 | 100 | 100 |
| Components (A) to (E) | parts | 40 | 40 | 40 | 40 | 40 | 40 | 40 |
| PEDOT-PSS dispersion | parts | 100 | 100 | 100 | 100 | 100 | 100 | 100 |
| Solid content of PEDOT-PSS | parts | 1.2 | 1.2 | 1.2 | 1.2 | 1.2 | 1.2 | 1.2 |
| CAT-PM-10A | parts | 5 | 5 | 5 | 5 | 5 | 5 | 5 |
| Amount of conductive complex relative to 100 parts by mass of the total amount of components (A) to (E) (parts) | parts | 3.0 | 3.0 | 3.0 | 3.0 | 3.0 | 3.0 | 3.0 |
| Type of conductive improver | | DGA | | | GA | HEA | PEG | DPG |
| Amount of conductive improver (parts) | parts | 12 | 20 | 40 | 20 | 20 | 20 | 20 |
| Amount of conductive improver relative to 100 parts by mass of the total amount of components (A) to (E) (parts) | parts | 30 | 50 | 100 | 50 | 50 | 50 | 50 |
| Curing time (second) | | 90 | 90 | 90 | 90 | 60 | 30 | 30 |
| Initial adhesion properties | | B | B | B | B | B | B | B |
| Adhesion properties with time | | A | A | A | A | A | A | A |
| Peel strength (N/2.5cm) | | 0.13 | 0.15 | 0.16 | 0.08 | 0.11 | 0.06 | 0.09 |
| Residual adhesion ratio | | 96.3 | 97.4 | 100.0 | 96.5 | 100.0 | 100.0 | 98.2 |
| Surface resistivity (Ω/□) | | $1.80\times10^{8}$ | $9.50\times10^{9}$ | $8.50\times10^{9}$ | $4.79\times10^{10}$ | $5.15\times10^{10}$ | $4.45\times10^{9}$ | $5.73\times10^{10}$ |

[Table 5]

| | | Comparative Examples | | | | | |
|---|---|---|---|---|---|---|---|
| | | 1 | 2 | 3 | 4 | 5 | 6 |
| Type of silicone emulsion | | 1 | 1 | 3 | 4 | 5 | 6 |
| Silicone emulsion | parts | 100 | 100 | 100 | 100 | 100 | 100 |
| Components (A) to (E) | parts | 40 | 40 | 40 | 40 | 40 | 40 |
| PEDOT-PSS dispersion | parts | 10 | 4000 | 200 | 200 | 200 | 200 |
| Solid content of PEDOT-PSS | parts | 0.12 | 48 | 2.4 | 2.4 | 2.4 | 2.4 |
| CAT-PM-10A | parts | 5 | 5 | 5 | 5 | 5 | 5 |
| Amount of conductive complex relative to 100 parts by mass of the total amount of components (A) to (E) (parts) | parts | 0.3 | 120.0 | 6.0 | 6.0 | 6.0 | 6.0 |
| Curing time (second) | | 120 | 30 | 30 | 30 | 30 | 30 |
| Initial adhesion properties | | B | A | A | C | A | C |
| Adhesion properties with time | | A | A | A | C | A | C |
| Peel strength (N/2.5cm) | | 0.06 | 0.49 | 0.50 | 0.05 | 0.60 | 0.05 |
| Residual adhesion ratio | | 87.2 | 87.7 | 89.0 | 88.8 | 90.5 | 89.8 |
| Surface resistivity (Ω/□) | | OVER | $6.47 \times 10^6$ | not tested | not tested | not tested | not tested |

According to release agent of Examples 1 to 22, a release agent layer having excellent adhesion properties relative to a PET film, easy releasing properties and antistatic properties could be formed. Examples 8 to 22 containing a conductive improver exhibited high antistatic properties.

With respect to the release agent of Comparative Example 1 in which the amount of the conductive complex was too small, the obtained release agent layer didn't exhibit antistatic properties.

With respect to the release agent of Comparative Example 2 in which the amount of the conductive complex was too large, easy releasing properties couldn't be achieved.

With respect to Comparative Example 3 in which the amount of the component (A) in silicone emulsion was too large, easy releasing properties couldn't be achieved.

With respect to the Comparative Example 4 in which the amount of the component (C) relative to the component (D) in silicone emulsion was too large, adhesion properties relative to a PET film was low.

With respect to Comparative Example 5 in which components (C) and (D) were not incorporated, easy releasing properties couldn't be achieved.

With respect to Comparative Example 6 in which component (C) was not incorporated, adhesion properties relative to a PET film was low.

[INDUSTRIAL APPLICABILITY]

The antistatic release agent of the first aspect of the present invention can form an antistatic release layer having superior adhesion property, antistatic property relative to a plastic film, and easy releasing property.

The antistatic release film and of the second aspect of the present invention has superior adhesion property and antistatic property relative to a plastic film and has a antistatic release layer having easy releasing property.

**Claims**

1. An antistatic release agent comprising: a silicone emulsion which contains components (A) to (E) shown below; and a conductive complex of a π-conjugated electrically conductive polymer and a polyanion, wherein the amount of the conductive complex relative to 100 parts by mass of the total amount of the components (A) to (E) is 0.5 to 100

parts by mass, the amount of the component (A) relative to 100 parts by mass of the total amount of the components (A) to (D) is 10 to 40 parts by mass, the amount of the component (B) relative to 100 parts by mass of the total amount of the components (A) to (D) is 20 to 70 parts by mass, the amount of the component (C) relative to 100 parts by mass of the total amount of the components (A) to (D) is 1 to 10 parts by mass, the amount of the component (D) relative to 100 parts by mass of the total amount of the components (A) to (D) is 5 to 30 parts by mass, provided that, the amount of the component (D) relative to the total amount of the components (C) and (D) is 50 to 90% by mass, and the amount of the component (E) is an amount such that the molar ratio of the total amount of SiH group within organohydrogenpolysiloxane V relative to the total amount of alkenyl group within the components (A) to (D), represented by (amount of SiH group) / (amount of alkenyl group) is 1.0 to 3.0:
Component (A): organopolysiloxane I which has viscosity of 5 to 100 mPa·s at 25°C and which is represented by the average compositional formula (1) shown below;

[Chemical Formula 1]

Average compositional formula (1)

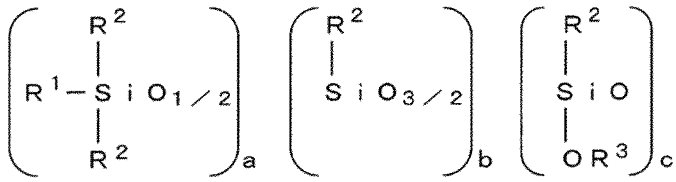

wherein $R^1$ represents an alkenyl group having 2 to 8 carbon atoms; $R^2$ represents a monovalent hydrocarbon group having 1 to 10 carbon atoms with or without a substituent or an alkenyl group having 2 to 8 carbon atoms, each $R^2$ may be the same or different; $R^3$ represents a hydrogen atom, a monovalent hydrocarbon group having 1 to 10 carbon atoms with or without a substituent; a and b each represents a positive integer; c represents an integer of 0 to 10, provided that, a, b and c fulfill $(b+c)/a = 0.6$ to 1.5, and $0 \leq c/(b+c) \leq 0{,}05$:
Component (B): organopolysiloxane II which has viscosity of 30 to 10,000 mPa·s at 25°C and which is represented by the average compositional formula (2) shown below:

[Chemical Formula 2]

Average compositional formula (2)

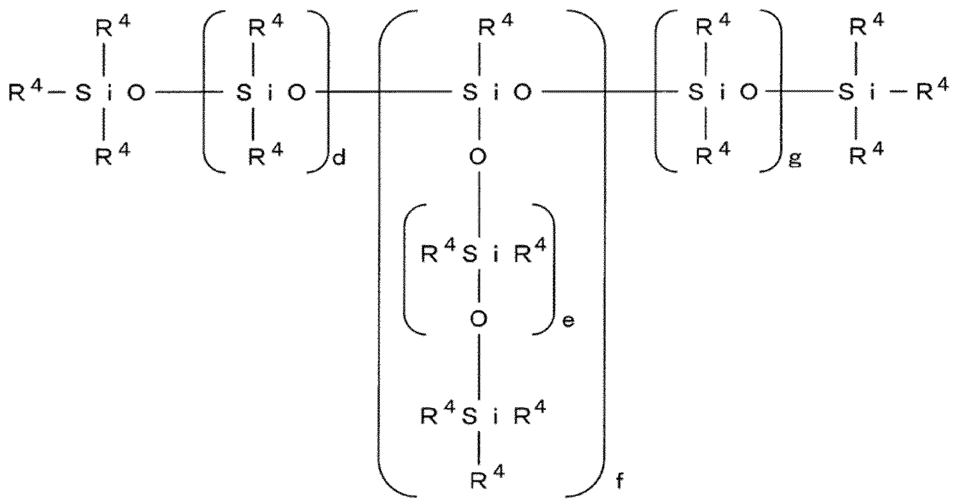

wherein $R^4$ represents a monovalent hydrocarbon group having 1 to 10 carbon atoms with or without a substituent or an alkenyl group having 2 to 8 carbon atoms, each $R^4$ may be the same or different, provided that, at least two of $R^4$ represents alkenyl groups; d, g and e each represents an integer of 0 or more; f represents an integer of 0 to

10, provided that f fulfills $0 \leq f \leq 10$; and each of d, e, f and g is an integer such that the viscosity of organopolysiloxane II becomes 30 to 10,000 mPa·s at 25°C:

Component (C): organopolysiloxane III which has viscosity of 30% by mass toluene-diluted solution of 1,000 to 50,000 mPa·s at 25°C, and has an alkenyl group and has an alkenyl value of 0.01 mol/100g or more:

Component (D): organopolysiloxane IV which has viscosity of 30% by mass toluene-diluted solution of 1,000 to 50,000 mPa·s at 25°C, and has an alkenyl group and an aryl group, and has an alkenyl value of 0.0002 mol/100g or more and less than 0.01 mol/100g, wherein the amount of aryl group relative to the total organic groups is 0.5 to 10 mol%:

Component (E): organohydrogenpolysiloxane V which is represented by average compositional formula (3) shown below, and has three hydrogen atoms bonded directly to silicon atoms in one molecule, and has viscosity of 5 to 2,000 mPa·s at 25°C;

Average compositional formula (3) $R^5_hH_iSiO_{(4-h-i)/2}$

wherein $R^5$ represents a monovalent hydrocarbon group having 1 to 10 carbon atoms with or without a substituent, and does not contain a aliphatic unsaturated bond; and h and i each represents an integer and fulfills $h+i \leq 3$.

2. The antistatic release agent according to claim 1, further containing a conductive improver.

3. The antistatic release agent according to claim 1 or 2, further containing a surfactant, a platinum group metal-based catalyst and water, wherein the amount of the surfactant relative to 100 parts by mass of the total amount of components (A) to (E) is 0.1 to 20 parts by mass, and the amount of water relative to 100 parts by mass of the total amount of components (A) to (E) is 50 to 100,000 parts by mass.

4. An antistatic release film comprising: a plastic film, a release agent layer formed on at least one surface of the plastic film, wherein the release agent layer is formed from the release agent according to any one of claims 1 to 3.

**Patentansprüche**

1. Antistatisches Trennmittel, das umfasst: eine Silikonemulsion, die die unten gezeigten Komponenten (A) bis (E) enthält; und einen leitfähigen Komplex aus einem π-konjugierten elektrisch leitfähigen Polymer und einem Polyanion, wobei die Menge des leitfähigen Komplexes, bezogen auf 100 Massenteile der Gesamtmenge der Komponenten (A) bis (E), 0,5 bis 100 Massenteile beträgt, die Menge der Komponente (A) bezogen auf 100 Massenteile der Gesamtmenge der Komponenten (A) bis (D) 10 bis 40 Massenteile beträgt, die Menge der Komponente (B) bezogen auf 100 Massenteile der Gesamtmenge der Komponenten (A) bis (D) 20 bis 70 Massenteile beträgt, die Menge der Komponente (C) bezogen auf 100 Massenteile der Gesamtmenge der Komponenten (A) bis (D) 1 bis 10 Massenteile beträgt, die Menge der Komponente (D) bezogen auf 100 Massenteile der Gesamtmenge der Komponenten (A) bis (D) 5 bis 30 Massenteile beträgt, vorausgesetzt, dass die Menge der Komponente (D) bezogen auf die Gesamtmenge der Komponenten (C) und (D) 50 bis 90 Massen-% beträgt, und die Menge der Komponente (E) eine solche Menge ist, dass das molare Verhältnis der Gesamtmenge an SiH-Gruppen innerhalb des Organohydrogenpolysiloxans V relativ zur Gesamtmenge an Alkenylgruppen innerhalb der Komponenten (A) bis (D), dargestellt durch (Menge an SiH-Gruppen) / (Menge an Alkenylgruppen), 0,1 bis 3,0 beträgt:

Komponente (A): Organopolysiloxan I, das eine Viskosität von 5 bis 100 mPa·s bei 25°C aufweist und das durch die unten gezeigte durchschnittliche Zusammensetzungsformel (1) dargestellt wird;

[Chemische Formel 1]

durchschnittliche Zusammensetzungsformel (1)

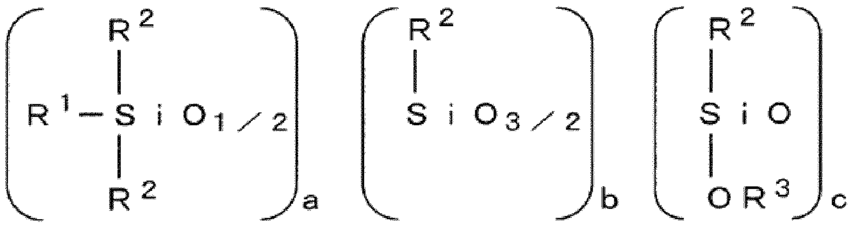

wobei $R^1$ eine Alkenylgruppe mit 2 bis 8 Kohlenstoffatomen darstellt; $R^2$ eine einwertige Kohlenwasserstoffgruppe mit 1 bis 10 Kohlenstoffatomen mit oder ohne einen Substituenten oder eine Alkenylgruppe mit 2 bis 8 Kohlenstoffatomen darstellt, wobei jedes $R^2$ gleich oder unterschiedlich sein kann; $R^3$ ein Wasserstoffatom, eine einwertige Kohlenwasserstoffgruppe mit 1 bis 10 Kohlenstoffatomen mit oder ohne einen Substituenten darstellt; a und b jeweils eine positive ganze Zahl darstellen; c eine ganze Zahl von 0 bis 10 darstellt, vorausgesetzt, dass a, b und c $(b+c)/a = 0{,}6$ bis 1,5, und $0 \leq c/(b+c) \leq 0{,}05$ erfüllen:

Komponente (B): Organopolysiloxan II, das eine Viskosität von 30 bis 10000 mPa·s bei 25°C aufweist und das durch die unten gezeigte durchschnittliche Zusammensetzungsformel (2) dargestellt wird:

[Chemische Formel 2]

durchschnittliche Zusammensetzungsformel (2)

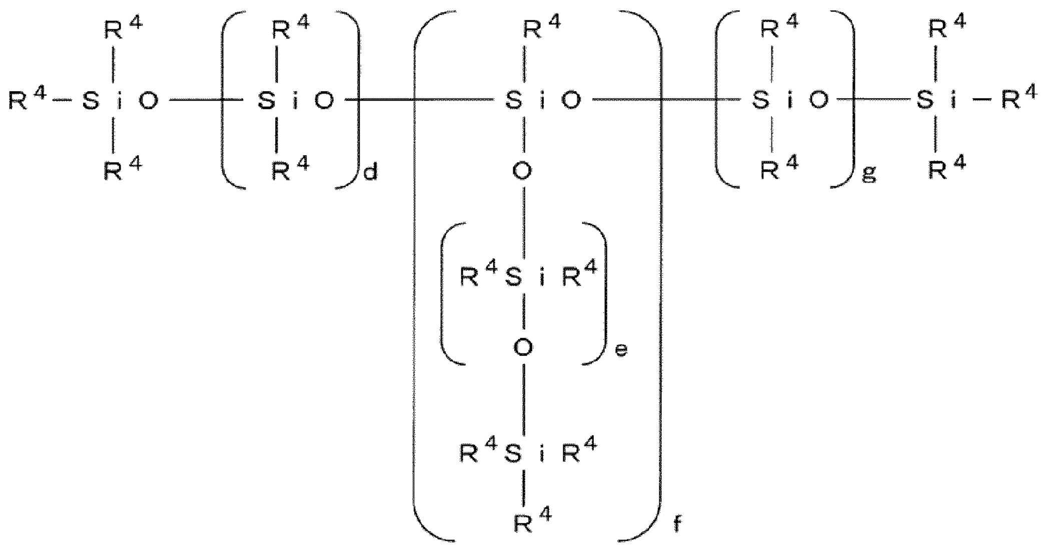

wobei $R^4$ eine einwertige Kohlenwasserstoffgruppe mit 1 bis 10 Kohlenstoffatomen mit oder ohne einen Substituenten oder eine Alkenylgruppe mit 2 bis 8 Kohlenstoffatomen darstellt, wobei jedes $R^4$ gleich oder unterschiedlich sein kann, vorausgesetzt, dass zumindest zwei von $R^4$ Alkenylgruppen darstellen; d, g und e jeweils eine ganze Zahl von 0 oder mehr darstellen; f eine ganze Zahl von 0 bis 10 darstellt, vorausgesetzt, dass f $0 \leq f \leq 10$ erfüllt; und jedes von d, e, f und g eine solche ganze Zahl ist, dass die Viskosität von Organopolysiloxan II bei 25°C 30 bis 10000 mPa·s wird:

Komponente (C): Organopolysiloxan III, das eine Viskosität einer mit 30 Massen-% Toluol verdünnten Lösung von 1000 bis 50000 mPa·s bei 25°C hat und eine Alkenylgruppe aufweist und einen Alkenylwert von 0,01 mol/100g oder mehr hat:

Komponente (D): Organopolysiloxan IV, das eine Viskosität einer mit 30 Massen-% Toluol verdünnten Lösung von 1000 bis 50000 mPa·s bei 25°C hat und eine Alkenylgruppe und eine Arylgruppe aufweist und einen Alkenylwert von 0,0002 mol/100g oder mehr und weniger als 0,01 mol/100g hat, wobei die Menge der Arylgruppe relativ zu den gesamten organischen Gruppen 0,5 bis 10 mol% beträgt:

Komponente (E): Organohydrogenpolysiloxan V, das durch die unten gezeigte durchschnittliche Zusammensetzungsformel (3) dargestellt ist und drei direkt an Siliciumatome gebundene Wasserstoffatome in einem Molekül aufweist und eine Viskosität von 5 bis 2000 mPa·s bei 25°C hat;

durchschnittliche Zusammensetzungsformel (3) $R^5{}_hH_iSiO_{(4-h-i)/2}$

wobei $R^5$ eine einwertige Kohlenwasserstoffgruppe mit 1 bis 10 Kohlenstoffatomen mit oder ohne einen Substituenten darstellt und keine aliphatische ungesättigte Bindung enthält; und h und i jeweils eine ganze Zahl darstellen und $h+i \leq 3$ erfüllen.

2. Antistatisches Trennmittel nach Anspruch 1, ferner enthaltend einen Leitfähigkeitsverbesserer.

3. Antistatisches Trennmittel nach Anspruch 1 oder 2, ferner enthaltend ein Tensid, einen Katalysator auf Basis eines Metalls der Platingruppe und Wasser, wobei die Menge des Tensids bezogen auf 100 Massenteile der Gesamtmenge der Komponenten (A) bis (E) 0,1 bis 20 Massenteile beträgt und die Menge des Wassers bezogen auf 100 Massenteile der Gesamtmenge der Komponenten (A) bis (E) 50 bis 100000 Massenteile beträgt.

4. Antistatische Trennfolie, das umfasst: eine Kunststofffolie, eine auf zumindest einer Oberfläche der Kunststofffolie gebildete Trennmittelschicht, wobei die Trennmittelschicht aus dem Trennmittel nach einem der Ansprüche 1 bis 3 gebildet ist.

## Revendications

1. Agent antiadhésif antistatique comprenant : une émulsion de silicone qui contient les composants (A) à (E) indiqués ci-dessous ; et un complexe conducteur d'un polymère électriquement conducteur $\pi$-conjugué et un polyanion, dans lequel la quantité du complexe conducteur pour 100 parties en masse de la quantité totale des composants (A) à (E) est de 0,5 à 100 parties en masse, la quantité du composant (A) pour 100 parties en masse de la quantité totale des composants (A) à (D) est de 10 à 40 parties en masse, la quantité du composant (B) pour 100 parties en masse de la quantité totale des composants (A) à (D) est de 20 à 70 parties en masse, la quantité du composant (C) pour 100 parties en masse de la quantité totale des composants (A) à (D) est de 1 à 10 parties en masse, la quantité du composant (D) pour 100 parties en masse de la quantité totale des composants (A) à (D) est de 5 à 30 parties en masse, sous réserve que la quantité du composant (D) par rapport à la quantité totale des composants (C) et (D) soit de 50 à 90 % en masse, et la quantité du composant (E) est une quantité telle que le rapport molaire de la quantité totale des groupes SiH dans l'organohydrogénopolysiloxane V à la quantité totale de groupes alcényle dans les composants (A) à (D), représenté par (quantité de groupes SiH) / (quantité de groupes alcényle), soit de 1,0 à 3,0 :

composant (A) : organopolysiloxane I qui a une viscosité de 5 à 100 mPa.s à 25°C et qui est représenté par la formule de composition moyenne (1) indiquée ci-dessous :

[formule chimique 1]

formule de composition moyenne (1)

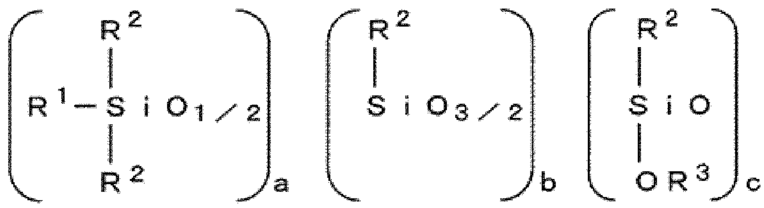

dans laquelle $R^1$ représente un groupe alcényle ayant 2 à 8 atomes de carbone ; $R^2$ représente un groupe hydrocarboné monovalent ayant 1 à 10 atomes de carbone avec ou sans substituant ou un groupe alcényle ayant 2 à 8 atomes de carbone, chaque $R^2$ peut être identique ou différent ; $R^3$ représente un atome d'hydrogène, un groupe hydrocarboné monovalent ayant 1 à 10 atomes de carbone avec ou sans substituant ; chacun de a et b est un entier positif ; c est un entier de 0 à 10, sous réserve que a, b et c satisfassent à $(b+c)/a = 0,6$ à 1,5, et $0 \leq c/(b+c) \leq 0,05$ ;

composant (B) : organopolysiloxane II qui a une viscosité de 30 à 10 000 mPa.s à 25°C et qui est représenté par la formule de composition moyenne (2) indiquée ci-dessous :

[formule chimique 2]

formule de composition moyenne (2)

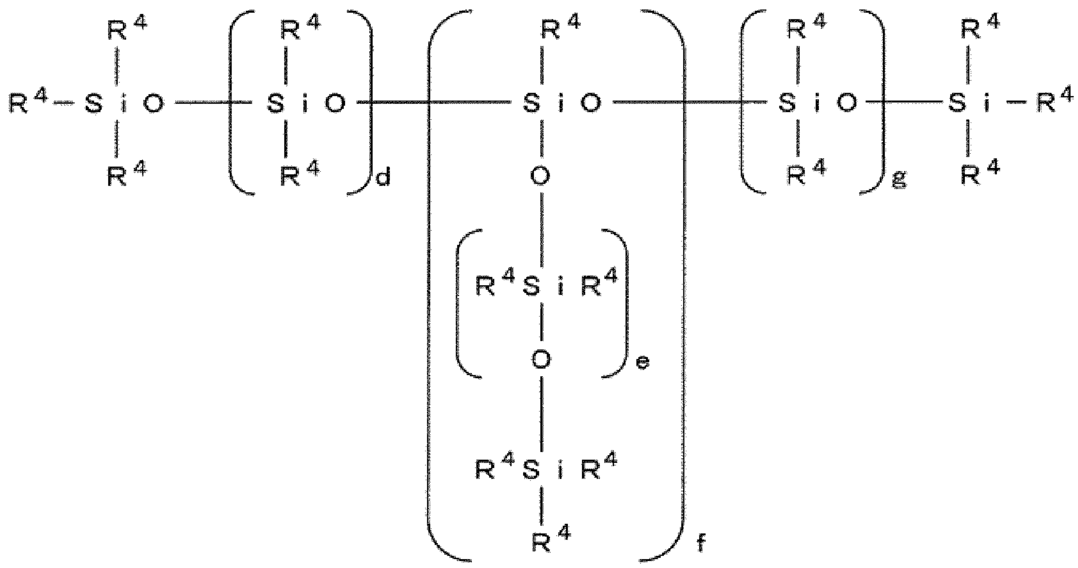

dans laquelle $R^4$ représente un groupe hydrocarboné monovalent ayant 1 à 10 atomes de carbone avec ou sans substituant ou un groupe alcényle ayant 2 à 8 atomes de carbone, chaque $R^4$ peut être identique ou différent, sous réserve qu'au moins deux $R^4$ représentent des groupes alcényle; chacun de d, g et e est un entier valant 0 ou plus ; f est un entier de 0 à 10, sous réserve que f satisfasse à $0 \leq f \leq 10$ ; et chacun de d, e, f et g est un entier tel que la viscosité de l'organopolysiloxane II devienne de 30 à 10 000 mPa.s à 25°C ;

composant (C) : organopolysiloxane III qui a une viscosité en solution diluée dans du toluène à 30 % en masse de 1 000 à 50 000 mPa.s à 25°C, et qui a un groupe alcényle et a un indice d'alcényle de 0,01 mol/100 g ou plus ;

composant (D) : organopolysiloxane IV qui a une viscosité en solution diluée dans du toluène à 30 % en masse de 1 000 à 50 000 mPa.s à 25°C, et qui a un groupe alcényle et un groupe aryle, et a un indice d'alcényle de 0,0002 mol/100 g ou plus et inférieur à 0,01 mol/100 g, la quantité de groupes aryle par rapport aux groupes organiques totaux étant de 0,5 à 10 % en moles ;

composant (E) : organohydrogénopolysiloxane V qui est représenté par la formule de composition moyenne (3) indiquée ci-dessous, et qui a trois atomes d'hydrogène directement liés à des atomes de silicium dans une molécule, et qui a une viscosité de 5 à 2 000 mPa.s à 25°C ;

formule de composition moyenne (3) $R^5_hH_iSiO_{(4-h-i)/2}$

dans laquelle $R^5$ représente un groupe hydrocarboné monovalent ayant 1 à 10 atomes de carbone avec ou sans substituant, et ne contient pas de liaison insaturée aliphatique ; et chacun de h et i est un entier et satisfait à $h+i \leq 3$.

2. Agent antiadhésif antistatique selon la revendication 1, contenant en outre un améliorant de conductivité.

3. Agent antiadhésif antistatique selon la revendication 1 ou 2, contenant en outre un tensioactif, un catalyseur à base de métal du groupe du platine et de l'eau, dans lequel la quantité du tensioactif pour 100 parties en masse de la quantité totale des composants (A) à (E) est de 0,1 à 20 parties en masse, et la quantité d'eau pour 100 parties en masse de la quantité totale des composants (A) à (E) est de 50 à 100 000 parties en masse.

4. Film antiadhésif antistatique comprenant : un film plastique, une couche d'agent antiadhésif formée sur au moins une surface du film plastique, dans lequel la couche d'agent antiadhésif est formée à partir de l'agent antiadhésif selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012201799 A
- JP HEI657144 A
- JP HEI11222557 A
- JP 2002241613 A
- JP 2636968 B